# EUROPÄISCHE PATENTSCHRIFT

(11) **EP 3 509 829 B1**
(45) Veröffentlichungstag und Bekanntmachung des Hinweises auf die Patenterteilung: **02.09.2020**
(21) Anmeldenummer: 17765151.0
(22) Anmeldetag: 06.09.2017
(51) Int. Cl.: B29C 70/54

(54) **TAPELEGEVORRICHTUNG UND TAPELEGEVERFAHREN ZUM SIMULTANEN LEGEN VON TAPES MIT VARIABLEM ABSTAND**
TAPE INSTALLATION DEVICE AND TAPE INSTALLATION METHOD FOR THE SIMULTANEOUS INSTALLATION OF TAPES WITH VARIABLE SPACING
DISPOSITIF DE POSE DE BANDES ET PROCÉDÉ DE POSE DE BANDES PERMETTANT LA POSE D'UNE BANDE À UNE DISTANCE VARIABLE

(30) Priorität: 08.09.2016 DE 102016116799
(43) Veröffentlichungstag der Anmeldung: 17.07.2019
(73) Patentinhaber: Dieffenbacher GmbH Maschinen- und Anlagenbau, 75031 Eppingen (DE)
(72) Erfinder: GRAF, Matthias, 75031 Eppingen (DE)
(74) Vertreter: Lemcke, Brommer & Partner Patentanwälte Partnerschaft mbB
(86) Internationale Anmeldenummer: PCT/EP2017/072388
(87) Internationale Veröffentlichungsnummer: WO 2018/046560

(56) Entgegenhaltungen:
- EP-A2- 2 310 191
- WO-A1-2014/083196
- DE-C1- 19 818 379
- US-B2- 8 048 253

## Beschreibung

Die vorliegende Erfindung bezieht sich auf eine Tapelegevorrichtung nach dem Oberbegriff des Anspruch 1 sowie auf ein Tapelegeverfahren zum Aufbau eines Laminats für beispielsweise Automobilbauteile nach dem Oberbegriff des Anspruchs 11.

Die Anwendungen für Faserverbundwerkstoffe sind über die vergangenen Jahrzehnte immer weiter gestiegen, insbesondere wenn sie als preiswerte Alternative zu den metallischen Werkstoffen gesehen werden konnten, mit den Vorteilen der Gestaltungsfreiheit und anwendungsspezifischer Formulierungsmöglichkeiten. Speziell der Werkstoff CFK (Carbon-faserverstärkter Kunststoff) hat ein extrem hohes Leichtbaupotential, wobei er sich zugleich durch seine hohe Festigkeit und sehr hohe Struktursteifigkeit auszeichnet. Letzteres ist beispielsweise im Automobilbau ein wichtiges Kriterium.

Die heutigen Entwicklungstätigkeiten für Produktionsanlagen zur Verarbeitung von Faserverbundwerkstoffen reichen daher von reiner Maschinenentwicklung bis hin zu schlüsselfertigen Produktionssystemen. Erstere umfassen für gewöhnlich Preform-Herstelleinheiten, Presseinheiten und ggf. Injektionseinheiten sowie Nachbearbeitungseinheiten - letztere die entsprechende Automatisierung für das Preform-Handling, eine eventuelle Werkzeugreinigung, die Bauteilentnahme und dergleichen mehr.

Die automatisierbare Herstellung der Preform stellt eine Schlüsseltechnologie im Herstellungsprozess von endlosfaserverstärkten Faserverbundbauteilen zur Realisierung einer effizienten Großserienfertigung mit reproduzierbarer stabiler Bauteilqualität dar. Aber auch bei sogenannten Hybridbauteilen, also formgepressten Blechen, die vornehmlich mit Carbonfaser-Halbzeugen verpresst werden, um kritische Belastungszonen zusätzlich zu verstärken, müssen sich alle Produktions-Einheiten anlagen- und steuerungstechnisch integrieren lassen, wenn eine hinreichende Produktivität erreicht werden soll.
Zur Herstellung von endlosfaserverstärkten Bauteilen werden heute überwiegend textile Halbzeuge, insbesondere Faser-Halbzeuge wie mit einem Binder (Schmelzkleber) benetzte und/oder mit einer Matrix teilweise oder vollständig imprägnierte Faser-Garne und/oder Flächengebilde (sog. Prepregs) wie Fasergewebe, Fasergestricke, Fasergelege oder Fasermatten verwendet. Die Matrix von faserverstärkten Kunststoffen hat die Aufgabe, die hochbelastbaren Fasern einzubetten (Stützfunktion) und deren Zwischenraum vollständig auszufüllen (Sperrfunktion).

An Binder- und/oder Matrix-Werkstoffen können grundsätzlich Materialien aus den Gruppen der Thermoplaste oder der Duroplaste und ggf. zusätzlicher elastifizierender Komponenten, wie Elastomere, eingesetzt werden, welche sich in der Festigkeit, der maximalen Dehnung, der Einsatztemperatur, der Verarbeitungsgeschwindigkeit und der Chemikalienbeständigkeit unterscheiden. Duroplastische Formmassen lassen sich durch Temperatureinwirkung plastifizieren, sind in diesem Moment formbar und härten dann irreversibel unter Druck und Temperatur aus. Im Gegensatz zu den Thermoplasten bestehen die Elastomere und Duroplaste (auch Duromere genannt) nach der Verarbeitung, d. h. im gebrauchsfertigen Zustand, aus mehr oder weniger stark vernetzten Makromolekülen, die in der Regel weder schmelzbar noch löslich sind.

Aus diesen Halbzeugen, die als Rollen oder Plattenware in Standardformaten zur Verfügung stehen, werden in einem Schneidprozess Zuschnitte erzeugt, die in der Regel das umgeformte Bauteil vollflächig auskleiden. Beim Schneiden der Zuschnitte entsteht, je nach Bauteilgeometrie ein signifikanter Schneidabfall, der nicht verarbeitet werden kann und die Effizienz dieses Prozesses erheblich verschlechtert.

Zur Verbesserung der Ressourceneffizienz können endlosfaserverstärkte Bauteile über Faser- oder auch als Tape-Legeverfahren bekannt gewordene Verfahren wesentlich verschnittärmer bzw. verschnittfrei hergestellt werden. Speziell die Verwendung von Tapes aus thermoplastischen Endlosfasern erweist sich als eine sehr attraktive Prozessvariante. Hierbei stellt insbesondere das Legen des für gewöhnlich als Tape vorliegenden Faserverbundwerkstoff zum Aufbau eines Laminats eine besondere Herausforderung dar.

Mit einem Tape ist im Zusammenhang mit der vorliegenden Erfindung vorzugsweise jegliche Art von bahnförmigem Material, insbesondere ein Prepregmaterial, das beispielsweise eine Breite zwischen 30 und 200 mm aufweist, gemeint, welches für ein Ablegen mittels einer Tapelegevorrichtung geeignet ist. Mit "Prepregmaterial" sind vorliegend insbesondere Fasergarne (Rovings), Fasergelege und/oder Fasergewebe gemeint, welche mit einem Binder benetzt und/oder mit einer Matrix, beispielsweise einer Duroplastmatrix oder Thermoplast Matrix, teilweise oder vollständig imprägniert, insbesondere vorimprägniert, sind.

Bei den Fasern handelt es sich insbesondere um Kohlenstofffasern, ist aber in gleicher Weise auch für Glasfasern oder andere, insbesondere künstlich hergestellte, Fasern anwendbar.

Das Tape kann auf einem Trägermaterial angeordnet sein, insbesondere einer Trägerfolie oder einem Trägerpapier, das während des Ablegens des Tapes zum Aufbau des Laminats sich von dem Trägermaterial löst, wobei das Trägermaterial mittels einer geeigneten Einrichtung der Tapelegevorrichtung beseitigt, beispielsweise aufgewickelt, wird. Bevorzugt können jedoch auch Tapes Verwendung finden, die keine Trägermaterialien mehr benötigen.

Zur Verarbeitung von Tapes ist bekannt, diese von einer Spule oder Rolle abzuziehen, auf Länge zu schneiden und auf einen Legetisch bzw. einer bereits auf dem Legetisch abgelegten Tapestruktur abzulegen. Mit dem Ablegen eines Tapestreifens wird dieser über eine Anzahl an Ultraschall-Schweißköpfen punktweise mit der darunter liegende Tapeschicht verbunden.

Zur Verarbeitung von Tapes und zur Durchführung eines Tape-Legeverfahrens werden vielfach automatische Vorrichtungen eingesetzt, welche in der Lage sind ein Tape strukturiert abzulegen. Bekannt sind insbesondere sog. Tapelegevorrichtungen, unter welchen vorliegend beispielsweise auch eine sog. Fiber-Placement-Vorrichtung zu verstehen ist.

Eine beispielhafte Tapelegevorrichtung ist aus dem Dokument WO 2014/083196 A1 bekannt, das eine Tapelegevorrichtung beschreibt, die mit zwei Legekopfeinheiten konfiguriert ist, wobei die Legeeinheiten ortsfest angeordnet sind. Die Legekopfeinheiten sind so angeordnet, dass sie für einen einzelnen Legetisch zugänglich sind. Die Legekopfeinheiten sind voneinander unabhängig und jeweils mit einer eigenen Material-Zuführungseinheit, Schneideinrichtung, Greifmittel mit zugehörigem Linearantrieb, Führungsbahnen und Bandhefteinheit konfiguriert. In dieser Konfiguration kann ein Bandabschnitt auf Länge gezogen, in Führungsbahnen positioniert und mit der ersten Legekopfeinheit auf dem zu produzierenden Teil in Position geheftet werden, während gleichzeitig der nächste Bandabschnitt auf Länge gezogen und auf der zweiten Legekopfeinheit in den Führungsbahnen positioniert wird. Nachdem der erste Bandabschnitt von der ersten Legekopfeinheit angeheftet wurde, wird der Legetisch und das auf ihm anhaftende zu produzierende Teil zur zweiten Legekopfeinheit bewegt, währenddessen der nächste Bandabschnitt vorbereitet und in Position gebracht ist, um am zu produzierenden Teil angeheftet zu werden. Somit wechselt der Legetisch konstant zwischen den zwei Legekopfeinheiten, um jeden neuen Bandabschnitt aufzunehmen, ohne funktionslos warten zu müssen, während der Greifmechanismus seine Aufgabe ausführt, einen Bandabschnitt auf Länge zu ziehen und diesen in den Führungsbahnen zu positionieren. Bei dieser Anordnung beeinträchtigen weder die Zeit, die ein Greifmittel benötigt, um lange Distanzen zurückzulegen, um auf das nächste Bandmaterial zuzugreifen, noch die Zeit, die für den Rückzug des Bandheftsystems erforderlich ist, signifikant die Produktivität der Lege-Maschine. Es wird vorgeschlagen, dass diese Konfiguration potenziell signifikantere Verkürzungen der Gesamtverfahrenszeiten ermöglicht als die derzeit erreichbaren Steigerungen der Geschwindigkeit und der Beschleunigungskapazitäten der Linearantriebe, die zur Positionierung eines Greifmechanismus oder einer Bandhefteinheit benützt werden.

Die US 8,048,253 B2 beschreibt ebenfalls eine Tapelegevorrichtung mit einem Legekopf, wobei ein Tape-Bandmaterial einer Schneideinrichtung zugeführt wird, welche ein Tape bzw. einen Tapestreifen abtrennt, der anschließend mit dem Legekopf auf die Bearbeitungsfläche eines Legetisches platziert wird. Das Tape-Bandmaterial und der abgetrennte Tapestreifen werden in dem Legekopf dabei jeweils in Führungsschienen geführt, die zu beiden Seiten des Bandes bzw. des Streifens angeordnet sind, wobei die Kanten des Bandes bzw. der Streifen in Nuten, die in den Führungsschienen vorgesehen sind, gehalten werden. Das Dokument beschreibt auch, dass mehrere Legeköpfe vorgesehen sein können, so dass es möglich wird, mehrere Tapestreifen gleichzeitig abzulegen.

Bedingt durch den konstruktiven Aufbau der Legeköpfe können in diesen Vorrichtungen die Tapestreifen nicht unmittelbar nebeneinander abgelegt werden. Um mittels Tapestreifen eine Fläche auszulegen, werden daher in diesen Vorrichtungen zunächst mehrere Tapestreifen gleichzeitig in einem Abstand zueinander abgelegt, so dass zwischen den abgelegten Tapestreifen jeweils eine Lücke von einer Breite eines Tapestreifens verbleibt. In einem nächsten Legeschritt werden dann die verbleibenden Lücken geschlossen, indem nun mit einem entsprechenden Versatz des Legetisches relativ zu den Legeköpfen weitere Tapestreifen in die verbleibenden Lücken gelegt werden. Für das Legen von großflächigen Bauteilen, oder einzelner Bauteillagen, kann auf diese Weise eine erhebliche Reduzierung der erforderlichen Zeit erzielt werden. Für schmale Bauteile, oder einzelne, schmale Lagen eines Bauteils, die aus nur jeweils zwei nebeneinander abzulegenden Tapestreifen gebildet werden, sind bei diesen bekannten Vorrichtungen jedoch weiterhin zwei Taktzyklen erforderlich, um diese Tapestreifen nacheinander entsprechend ablegen zu können.

Darüber hinaus besteht bei beiden dieser bekannten Tapelegevorrichtungen der Nachteil, dass wegen dem nur seitlichen Führen und Halten der Tapestreifen bzw. der Tapes mittels der Führungsschienen das zu verarbeitende Tape-Bandmaterial eine hinreichend hohe innere Steifigkeit aufweisen muss, so dass es nicht dazu kommt, dass das Tape-Bandmaterial durchhängt und aus den Führungsschienen fällt. Dies kann eine unerwünschte Einschränkung hinsichtlich der verarbeitbaren Materialien, Dicken und/oder Breiten darstellen.

Es ist daher eine Aufgabe der Erfindung, eine verbesserte Tapelegevorrichtung und ein verbessertes Tapelegeverfahren anzugeben, welches die vorstehenden Nachteile überwindet.

Es ist insbesondere eine Aufgabe der Erfindung, eine verbesserte Tapelegevorrichtung und ein verbessertes Tapelegeverfahren anzugeben, welche ein schnelles Legen auch von schmalen Bauteilen oder von schmalen Bauteillagen erlauben.

Es ist eine nochmals weitere Aufgabe der Erfindung, eine verbesserte Tapelegevorrichtung und ein verbessertes Tapelegeverfahren anzugeben, welche flexibel und rasch zum effizienten Ablegen von Tape-Bandmaterial unterschiedlicher Breiten eingesetzt werden können.

Als eine Lösung wird eine Tapelegevorrichtung angegeben, aufweisend eine erste Materialzuführungseinheit zum Zuführen eines Tape-Bandmaterials, eine erste Schneideinrichtung zum Abtrennen eines ersten Tapes von dem Tape-Bandmaterial, eine erste Legeeinrichtung zum Aufnehmen und zum Platzieren des von der ersten Schneideinrichtung abgetrennten ersten Tapes auf einem Legetisch, eine zweite Materialzuführungseinheit zum Zuführen eines Tape-Bandmaterials, eine zweite Schneideinrichtung mit einem Schneidmittel zum Abtrennen eines zweiten Tapes von dem Tape-Bandmaterial, eine zweite Legeeinrichtung zum Aufnehmen und zum Platzieren des von der zweiten Schneideinrichtung abgetrennten zweiten Tapes auf dem Legetisch, und eine Steuereinrichtung zum Steuern und/oder Regeln des Betriebs der Tapelegevorrichtung, wobei die erste Legeeinrichtung und/oder die zweite Legeeinrichtung eingerichtet sind, eine Querbewegung in Querrichtung auszuführen, und die Steuereinrichtung eingerichtet ist, die Querbewegung der ersten Legeeinrichtung und/oder der zweiten Legeeinrichtung zu steuern und/oder zu regeln.

Die Querrichtung bezeichnet bevorzugt eine Richtung, die in der Ebene des von der entsprechenden ersten bzw. zweiten Legeeinrichtung gehaltenen ersten bzw. zweiten Tapes liegt, und die senkrecht zur Produktionsrichtung des ersten bzw. zweiten Tapes steht. Die Produktionsrichtung entspricht der Transportrichtung der Tapes in den einzelnen Einrichtungen der Tapelegevorrichtung. In der Aufnahmeposition wird die Stellung der Legeeinrichtung bezeichnet, in welche diese das geschnittene Tape von der Zuführeinrichtung bzw. der Schneideinrichtung übernimmt bzw. aufnimmt. Wird das Tape auf dem Legetisch in seiner endgültigen und gewünschten Position abgelegt, so kann dies auch als Ablegeposition bezeichnet werden.

Mit der erfindungsgemäßen Querverfahrbarkeit wird eine hohe Flexibilität in der Ablage von Tapes erzielt. Ohne dass Legeköpfe oder andere Maschinenteile der Tapelegevorrichtung neu oder anders justiert werden müssen, können Tapes in beliebigen, variablen und vorgebbaren Abständen zueinander auf einem Legetisch platziert werden.

Die Querbewegung der ersten Legeeinrichtung und/oder der zweiten Legeeinrichtung wird insbesondere derart gesteuert und/oder geregelt, dass das erste Tape und das zweite Tape Stoß an Stoß, mit einer vorgegebenen Überlappung oder mit einer vorgegebenen Lücke auf dem Legetisch platziert werden. Mit der erfindungsgemäßen Querverfahrbarkeit in Querrichtung wird es somit ebenfalls möglich, dass in einem Arbeitsschritt zwei Tapes gleichzeitig und unmittelbar nebeneinander platziert werden. Dies erlaubt eine große Steigerung der Legerate beispielsweise beim Legen von schmalen Bauteilen oder Bauteillagen.

Vorteilhafter Weise erfolgt die Querbewegung der ersten Legeeinrichtung und/oder der zweiten Legeeinrichtung zumindest teilweise gleichzeitig mit einem Absenken der ersten Legeeinrichtung und der zweiten Legeeinrichtung zum Platzieren des ersten Tapes und des zweiten Tapes auf dem Legetisch.

Bevorzugt wird das Absenken der ersten Legeeinrichtung und der zweite Legeeinrichtung zum Platzieren des ersten Tapes und des zweiten Tapes auf dem Legetisch gesteuert und/oder geregelt, dass das Absenken der zweiten Legeeinrichtung mit einem zeitlichen Versatz oder mit einem Höhenversatz relativ zum Absenken der ersten Legeeinrichtung erfolgt. Auf diese Weise wird es möglich, eine definierte Lage der Tapes zueinander sicherzustellen. Insbesondere im Fall von Überlappungen kann so sichergestellt werden, dass ein Tapes wie gewünscht und sicher auf bzw. unter dem anderen Tapes zu liegen kommt. Es kann somit eine höhere Präzision und Qualität der gelegten Bauteile sichergestellt werden.

Es kann vorgesehen sein, dass eine Seitenkante der ersten Schneideinrichtung oder eine Seitenkante einer zwischen der ersten Schneideinrichtung und der ersten Legeeinrichtung angeordneten ersten Zuführungseinrichtung als eine erste Führungskante dient, an welcher eine Seitenkante des Tape-Bandmaterials und/oder des ersten Tapes flüchtig ausgerichtet ist, und dass eine Seitenkante der zweiten Schneideinrichtung oder eine Seitenkante einer zwischen der zweiten Schneideinrichtung und der zweiten Legeeinrichtung angeordneten zweiten Zuführungseinrichtung als eine zweite Führungskante dient, an welcher eine Seitenkante des Tape-Bandmaterials und/oder des zweiten Tapes flüchtig ausgerichtet ist. Weiter bevorzugt dient die erste Führungskante oder die zweite Führungskante als virtuelle Nulllinie dient, wobei die Steuereinrichtung eingerichtet ist, die Querbewegung der ersten Legeeinrichtung und/oder der zweiten Legeeinrichtung relativ zur Nulllinie zu steuern und/oder zu regeln. Mit diesen Maßnahmen kann zum einen eine in der Lage sichere und zuverlässige Positionierung und Führung des Tape-Bandmaterials sowie der Tapes erzielt werden, sowie eine aus Steuerungssicht zuverlässige und wohldefinierte Positionierung der Tapes vorgenommen werden.

Vorzugsweise dient eine erste Führungskante oder eine zweite Führungskante als eine virtuelle Nulllinie dient und die Steuereinrichtung ist derart eingerichtet, dass die Querbewegung in Querrichtung der ersten Legeeinrichtung und/oder der zweiten Legeeinrichtung relativ zur Nulllinie gesteuert und/oder geregelt werden kann. Als Führungskante kann dabei die Kante eines Tapes dienen oder auch eine bestimmte zuvor festgelegte Kante innerhalb der Schneideinrichtung, der Zuführeinrichtung und/oder der Legeeinrichtung, zu welcher das Tape in einem relativen, aber bekannten Abstand ausgerichtet werden kann.

Bevorzugt weisen die erste Legeeinrichtung und die zweite Legeeinrichtung jeweils zumindest eine Hefteinrichtung, insbesondere eine Ultraschalleinrichtung auf, die eingerichtet ist, das erste Tape bzw. zweite Tape nach dem Platzieren auf dem Legetisch an einer darunter liegenden Tapelage anzuheften. Mit derartigen integrierten Lege- und Hefteinheiten kann die Taktzeit der Tapelegevorrichtung weiter verkürzt und die Qualität und Präzision der zu legenden Bauteile weiter verbessert werden.

Auch kann vorgesehen sein, dass die erste Legeeinrichtung, die zweite Legeeinrichtung, die erste Schneideinrichtung, die zweite Schneideinrichtung, eine zwischen der ersten Schneideinrichtung und der ersten Legeeinrichtung angeordnete erste Zuführungseinrichtung und/oder eine zwischen der zweiten Schneideinrichtung und der zweiten Legeeinrichtung angeordnete zweite Zuführungseinrichtung jeweils ein flächiges Transportelement aufweist, wobei das Tape-Bandmaterial bzw. das erste Tape bzw. zweite Tape auf einer Oberfläche des flächigen Transportelements transportiert wird.

Das flächige Transportelement kann als ein um Umlenkrollen umlaufendes, endloses Transportband ausgeführt sein. Alternativ kann das flächige Transportelement eine plattenförmige Auflagefläche aufweist, die in und entgegen der Produktionsrichtung des Tape-Bandmaterials bzw. des ersten Tapes bzw. zweiten Tapes verfahrbar ist.

Es kann weiter bevorzugt eine Vakuumeinrichtung vorgesehen sein, welche mit dem flächigen Transportelement derart verbunden ist, um das Tape-Bandmaterial und/oder das erste Tape bzw. zweite Tape mittels von der Vakuumeinrichtung erzeugten Unterdrucks auf dem flächigen Transportelement zu halten.

Als eine weitere Lösung wird ein Tapelegeverfahren angegeben, umfassend Zuführen von Tape-Bandmaterial in eine erste Schneideinrichtung, und Zuführen von Tape-Bandmaterials in eine zweite Schneideinrichtung, Abtrennen eines ersten Tapes von dem Tape-Bandmaterial mittels der ersten Schneideinrichtung, und Abtrennen eines zweiten Tapes von dem Tape-Bandmaterial mittels der zweiten Schneideinrichtung, Aufnehmen des ersten Tapes mittels einer ersten Legeeinrichtung, und Aufnehmen des zweiten Tapes mittels einer zweiten Legeeinrichtung, und Platzieren des ersten Tapes und des zweiten Tapes mittels der ersten und der zweiten Legeeinrichtung auf einem Legetisch, wobei nach Aufnehmen des zweiten Tapes mittels der zweiten Legeeinrichtung und vor dem Platzieren des zweiten Tapes auf dem Legetisch die zweite Legeeinrichtung in einer Querrichtung bewegt wird.

Bevorzugt erfolgt in dem Verfahren die Querbewegung der zweiten Legeeinrichtung derart, dass das erste Tape und das zweite Tape Stoß an Stoß, mit einer vorgegebenen Überlappung oder mit einer vorgegebenen Lücke auf dem Legetisch platziert werden.

Es ist weiterhin bevorzugt, dass die erste Legeeinrichtung und/oder die zweite Legeeinrichtung zumindest teilweise gleichzeitig mit einem Absenken der ersten Legeeinrichtung und/oder der zweiten Legeeinrichtung zum Platzieren des ersten Tapes und des zweiten Tapes auf dem Legetisch in einer Querrichtung bewegt wird. Dies erlaubt insbesondere eine Einsparung in der Taktzeit zum Legen von einzelnen Tapes.

In einer bevorzugten Ausführungsform wird die zweite Legeeinrichtung mit einem zeitlichen Versatz, vorzugsweise von 0,1 bis 0,4 Sekunden, besonders bevorzugt von 0,2 bis 0,3 Sekunden, oder mit einem Höhenversatz relativ zum Absenken der ersten Legeeinrichtung abgesenkt.

Alternativ oder in Kombination dient eine Seitenkante der ersten Schneideinrichtung oder eine Seitenkante einer zwischen der ersten Schneideinrichtung und der ersten Legeeinrichtung angeordneten ersten Zuführungseinrichtung als eine erste Führungskante, an welcher eine Seitenkante des Tape-Bandmaterials und/oder des ersten Tapes flüchtig ausgerichtet ist, und eine Seitenkante der zweiten Schneideinrichtung oder eine Seitenkante einer zwischen der zweiten Schneideinrichtung und der zweiten Legeeinrichtung angeordneten zweiten Zuführungseinrichtung als eine zweite Führungskante dient, an welcher eine Seitenkante des Tape-Bandmaterials und/oder des zweiten Tapes flüchtig ausgerichtet ist.

Vorzugsweise wird die erste Führungskante oder die zweite Führungskante als virtuelle Nulllinie dient die erste Legeeinrichtung und/oder die zweite Legeeinrichtung relativ zur Nulllinie in Querrichtung bewegt wird.

Weitere bevorzugte Ausführungsformen sind in den abhängigen Ansprüchen dargelegt sowie im Nachfolgenden an Hand von beispielhaften Ausführungsformen mit Bezug auf die Zeichnungen beschrieben:
Es zeigen:
- Fig. 1: zeigt eine Tapelegevorrichtung gemäß einer bevorzugten Ausführungsform in einer schematischen Querschnittsansicht von der Seite;
- Fig. 2: zeigt die Tapelegevorrichtung der Fig. 1 in einer schematischen Draufsicht;
- Fig. 3A bis 3K: zeigen beispielhaft ein Ablegen von Tapes "auf Lücke" zum Legen einer großflächigen Bauteillage;
- Fig. 4A bis 4L: zeigen beispielhaft ein Verfahren zum Ablegen von Tapes gemäß einer Ausführungsform, wobei die Tapes gleichzeitig und nebeneinander abgelegt werden;
- Fig. 5A, 5B: zeigen beispielhaft eine Abwandlung des Verfahrens der Fig. 4A bis 4L;
- Fig. 6A bis 6E: zeigen beispielhaft ein weiteres Verfahren zum Ablegen von Tapes gemäß einer Ausführungsform.

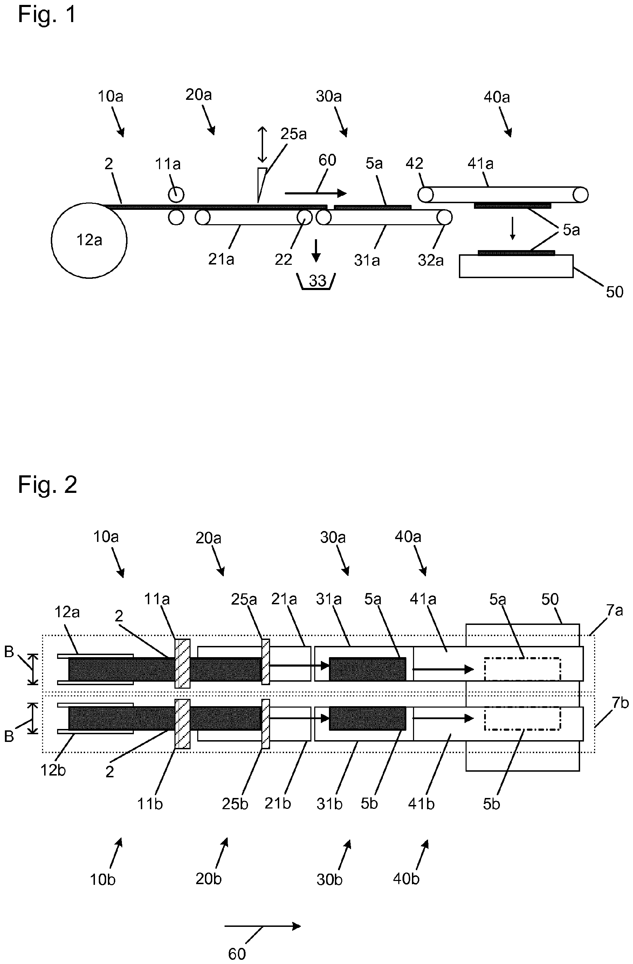

In der Fig. 1 ist eine Tapelegevorrichtung 1 gemäß einer Ausführungsform in einer schematischen Querschnittsansicht dargestellt. Wie in Fig. 1 gezeigt wird in der Tapelegevorrichtung 1 ein Tape-Bandmaterial 2, das beispielsweise auf einer Spule 12a aufgewickelt bereitgestellt wird, mittels einer Materialzufuhreinheit 10a von der Spule 12a abgewickelt und einer, der Materialzufuhreinheit 10a nachgeordneten Schneideinrichtung 20a zugeführt. Zu diesem Zweck kann die Materialzufuhreinheit 10a ein Paar von Antriebswalzen 11a aufweisen, die einen Walzenantrieb, auch als Mangelantrieb bezeichnet, bilden, der für den Transport des Tape-Bandmaterials 2 sorgt. Die Antriebswalzen 11a werden dabei von einem oder von mehreren Motoren (nicht dargestellt) unter Steuerung einer Steuereinrichtung (nicht dargestellt) angetrieben, so dass das Tape-Bandmaterial 2 mit einer gewünschten Geschwindigkeit und/oder einer gewünschten Länge in die Schneideinrichtung 20a "geschoben" und derart zugeführt wird.

In der Schneideinrichtung 20a wird das Tape-Bandmaterial 2 mittels eines Schneidmittels, das beispielsweise als ein Schneidmesser 21a ausgeführt ist, geschnitten, um von dem Tape-Bandmaterial 2 einzelne Tapes 5a einer jeweils gewünschten Länge abzutrennen. Das Schneidmesser 21a ist dabei winkelig verstellbar, so dass nicht nur Schnitte quer zur Bandrichtung des Tape-Bandmaterials 2 ausgeführt werden können, sondern mittels einer entsprechenden Verstellung des Schneidmessers 21a um einen beliebigen Winkel von beispielsweise ± 45° relativ zur Querrichtung des Tape-Bandmaterials 2 auch Tapes 5a abgeschnitten werden können, die in einem entsprechenden, gewünschten Winkel zugeschnitten sind.

Nachdem die Tapes 5a derart in der Schneideinrichtung 20a von dem Tape-Bandmaterial 2 abgetrennt und vereinzelt wurden, werden die Tapes 5a auf eine Zuführungseinrichtung 30a übergeben, welche die Tapes 5a einer Legeeinrichtung 40a zuführt und an diese übergibt.

Solche Tapes 5, welche für die weiteren Produktionen nicht brauchbar sind, sowie Verschnittmaterial für beispielsweise Korrekturschnitte, können zwischen der Schneideinrichtung 20 und der Zuführungseinrichtung 30 aus der Tapelegevorrichtung 1 ausgeschleust und beispielsweise einen Abwurfbehälter 33 zugeführt werden.

Die Legeeinrichtung 40a ist über einem Legetisch 50 angeordnet und kann in vertikaler Richtung relativ zum Legetisch 50 bewegt werden, so dass die Legeeinrichtung 40a jeweils ein einzelnes Tape 5a auf dem Legetisch 50 platzieren und ablegen kann. Beispielsweise kann eine Linearführung (nicht dargestellt) vorgesehen sein, mittels der die Legeeinrichtung 40a in vertikaler Richtung 62 auf den Legetisch 50 abgesenkt werden kann, um die Tapes 5a auf einer Arbeitsfläche des Legetischs 50, oder einer bereits zuvor auf der Arbeitsfläche des Legetisches 50 ausgebildeten Tapestruktur abzulegen, und gegebenenfalls kurz und leicht anzudrücken. Nach dem Ablegen der Tapes 5a wird die Legeeinrichtung 40a wieder angehoben, um ein nächstes Tape 5a aufzunehmen. Es sei hierbei bemerkt, dass im Sinne dieses Dokuments sowohl das Platzieren und Ablegen eines Tapes 5a auf der Arbeitsfläche des Legetisches 50, als auch das Ablegen eines Tapes 5a auf einem bereits zuvor auf dem Legetisch 50 abgelegten Tape 5a, insbesondere auf einer zuvor ausgebildeten Tapelage, als ein Platzieren und Ablegen eines Tapes 5a auf dem Legetisch 50 verstanden werden soll.

Um das Absenken in vertikaler Richtung 62 der Legeeinrichtung 40a zu ermöglichen, kann bei der Ausführungsform der Fig. 1 vorgesehen sein, dass die Zuführungseinrichtung 30a ebenfalls und gemeinsam mit der Legeeinrichtung 40a vertikal abgesenkt und angehoben wird. Dies kann insbesondere dadurch geschehen, dass die Zuführungseinrichtung 30a und die Legeeinrichtung 40a zu einer als Legekopf 7a bezeichneten Einheit zusammengefasst werden, wie nachstehend mit Bezug auf die Fig. 2 näher erläutert, und der Legekopf 7a als Ganzes vertikal bewegt wird, um ein Tape 5a abzulegen. In einer alternativen Variante kann die Zuführungseinheit 30a auch kippbar ausgestaltet sein, so dass sich die Legeeinrichtung 40a in vertikaler Richtung 62 absenken kann und die Zuführungseinheit 30a währenddessen um einen Winkel abkippt und somit den Platz zum Legen des Tapes 5a auf dem Legetisch 50 freigibt. Alternativ ist es auch denkbar, den Legekopf 7a bzw. die Legeeinrichtung 40a feststehend auszubilden, und den Legetisch 50 hebbar auszugestalten, so dass zur Ablage eines Tapes 5a der Legetisch 50 angehoben wird. Im Übrigen ist es bevorzugt, dass der Legetisch 50 unter Steuerung der Steuereinrichtung (nicht dargestellt) um eine vertikale Achse gedreht werden kann, und/oder in horizontaler Richtung in x- und/oder y-Richtung bewegt werden kann, um eine gewünschte relative Positionierung des Tapes 5a relativ zum Legetisch 50 zu ermöglichen.

Zur Erhöhung der Legerate ist es insbesondere vorgesehen, dass mehrere Tapes 5a simultan, das heißt, insbesondere zeitgleich und mehrspurig gehandhabt werden können, wobei durch eine solche Parallelisierung vorteilhaft die Anzahl gelegter Tapes 5a pro Abfolge entsprechend multipliziert wird. Entsprechend ist in der Tapelegevorrichtung 1 dieser Ausführungsform, wie in der Draufsicht in Fig. 2 gezeigt, bevorzugt vorgesehen, dass die entsprechenden Einheiten in entsprechend multipler Ausführung vorgesehen sind. So können, wie in Fig. 2 dargestellt, jeweils zwei Spulen 12a, 12b vorgesehen sein, von welchen mittels zwei Materialzufuhreinheiten 10a, 10b mit insgesamt zwei Paaren von Antriebswalzen 11a, 11b zwei Stränge eines Tape-Bandmaterial 2 abgezogen und zu zwei jeweiligen Schneideinrichtungen 20a, 20b zugeführt werden, wo mittels zweier Schneidmesser 21a, 21b zwei jeweilige Tapes 5a, 5b abgetrennt und mittels zweier Zuführungseinrichtungen 30a, 30b zu zwei Legeeinrichtungen 40a, 40b zugeführt werden. Mittels der zwei Legeeinrichtungen 40a, 40b können somit zwei Tapes 5a, 5b gleichzeitig auf dem Legetisch 50 platziert und abgelegt werden.

Wie in der Fig. 2 angedeutet, können die Materialzufuhreinheit 10a, die Schneideinrichtung 20a, die Zuführungseinrichtung 30a und die Legeeinrichtung 40a bzw. die Materialzufuhreinheit 10b, die Schneideinrichtung 20b, die Zuführungseinrichtung 30b und die Legeeinrichtung 40b jeweils in einem Legekopf 7a bzw. 7b zusammengefasst sein. Dies ist jedoch nicht beschränkend, und es ist ebenfalls möglich, dass ein Legekopf 7a, 7b, nur die Legeeinrichtung 40a, 40b, oder neben der Legeeinrichtung 40a, 40b auch die Zuführungseinrichtung 30a, 30b und/oder gegebenenfalls die Schneideinrichtung 20a, 20b und/oder auch die Materialzufuhreinheit 10a, 10b umfasst.

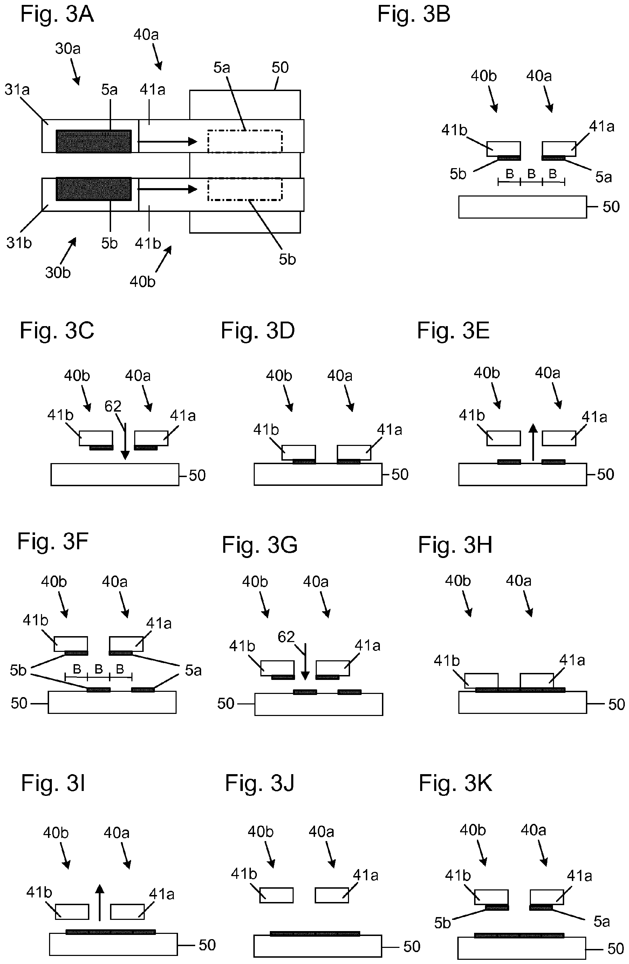

Wie im Fall von im Stand der Technik bekannten Tapelegevorrichtungen 1 sind die Legeköpfe 7a, 7b bzw. die darin enthaltenen Einheiten so eingerichtet, dass in einem Arbeitstakt zwei oder mehrere simultan abzulegende Tapes 5a, 5b, welche jeweils eine Breite B aufweisen, um diese Breite B, oder um ein mehrfaches dieser Breite B (z.B. 2B, 3B, ...) zueinander beabstandet abgelegt werden, wobei in einem, oder gegebenenfalls in mehreren nachfolgen(den) Arbeitstakt(en) durch Ablegen weiterer Tapes 5a, 5b die verbleibenden Lücken zwischen bereits gelegten Tapes 5a, 5b aufgefüllt werden, um eine geschlossene Tapelage auszubilden, wie beispielhaft im Nachfolgenden mit Bezug auf die Fig. 3A bis 3K erläutert wird.

Es kann weiter ebenfalls vorgesehen sein, dass, wie bekannt, während des Ablegens von Tapes 5a, 5b bereits zuvor abgelegte Tapes 5a, 5b zum Beispiel mittels hierzu vorgesehenen Ultraschalleinrichtungen oder anderen Hefteinrichtungen an der oder den darunter liegenden Tapelagen angeheftet werden, beispielsweise durch Plastifizieren, oder zumindest teilweise mit der oder den darunter liegenden Tapelagen zu einem Laminat konsolidiert werden. Dieses Vorgehen kann für jede weitere Tapelagen wiederholt werden. Alternativ oder ergänzend ist es auch möglich, die Tapes 5a, 5b unmittelbar nachdem sie auf dem Legetisch 50 abgelegt und platziert werden an der oder den darunter liegenden Tapelagen anzuheften, beispielsweise mittels Hefteinrichtungen, insbesondere Ultraschalleinrichtungen, die in den Legeeinrichtungen 40a, 40b vorgesehen sind.

Wie in den Fig. 1 und 2 dargestellt, sind die Legeeinrichtung 40a, 40b, die Zuführungseinrichtung 30a, 30b und die Schneideinrichtung 20a, 20b bevorzugt mit Transportbändern 21a, 21b, 31a, 31b, 41a, 41b ausgeführt, die um jeweilige Umlenkrollen 22, 32, 42 endlos umlaufen. In der Zuführungseinrichtung 30a, 30b werden dabei die Tapes 5a, 5b aufliegend, das heißt, auf einer Oberseite der Zuführungseinrichtung 30a, 30b auf dem Transportband 31a, 31b aufliegend transportiert. Hingegen werden die einzelnen Tapes 5a, 5b in der Legeeinrichtung 40a, 40b jeweils "hängend" transportiert. Hierzu ist die Legeeinrichtung 40a, 40b vorzugsweise mit einer Vakuumeinrichtung (nicht dargestellt) versehen, welche so mit dem Transportband 41a, 41b der Legeeinrichtung 40a, 40b verbunden ist, dass durch das Transportband 41a, 41b hindurch Luft angesaugt und so ein Unterdruck aufgebaut werden kann, beispielsweise indem eine Vielzahl von Öffnungen in dem Transportband 41a, 41b vorgesehen sind, durch welche die Luft angesaugt werden kann. Durch den so entstehenden Unterdruck kann ein auf dem Transportband 31a, 31b der Zuführungseinrichtung 30a, 30b aufliegendes, der Legeeinrichtung 40a, 40b zugeführtes Tape 5a, 5b angesaugt werden, so dass er auf der Unterseite der Legeeinrichtung 40a, 40b an dem Transportband 41a, 41b anliegend gehalten wird. Die Vakuumeinrichtung kann abgeschaltet werden, nachdem das Tape 5a, 5b auf dem Legetisch 50 platziert wurde.

Es ist hierbei besonders vorteilhaft, wenn eine Seitenkante des Transportbandes 21a, 21b als eine Führungskante dient, die insbesondere mit einer gleichen Seitenkante des Tape-Bandmaterials 2 und/oder des Tapes 5a, 5b flüchtig ausgerichtet ist. Dies kann beispielsweise dadurch unterstützt werden, dass an dieser Seitenkante des Transportbandes 21a, 21b ein seitliches Leitblech (nicht dargestellt) angeordnet wird, das als Anschlag und Führung für das Tape-Bandmaterial 2, bzw. für davon abgetrennte Tapes 5a, 5b dient. Auf diese Weise kann eine stets gleichbleibende, in der Position unveränderte und wohldefinierte Lage dieser Seitenkante des Tape-Bandmaterials 2 bzw. der Tapes 5a, 5b relativ zum Transportband 21a, 21b sichergestellt werden. Dementsprechend wirken sich unterschiedliche Breiten B des Tape-Bandmaterials 2 bzw. der davon abgetrennten Tapes 5a, 5b nur auf die Lage der gegenüberliegenden Seitenkante aus, welche Lage ausgehend von der Führungskante und durch die bekannte Breite B des Tape-Bandmaterials 2 bzw. der Tapes 5a, 5b definiert wird. Auf diese Weise ist es möglich, auch bei Verwendung von Tape-Bandmaterialien 2 unterschiedlicher Breite B eine jeweils wohldefinierte und genaue Positionierung der Tapes 5a, 5b auf dem Transportband 21a, 21b, und damit in Folge auch in der Zuführungseinrichtung 30a, 30b und der Legeeinrichtung 40a, 40b zu erzielen, und so eine hohe Legepräzision sicherzustellen.

Im Übrigen kann ergänzend oder alternativ auch für die Zuführungseinrichtungen 30a, 30b und/oder die Legeeinrichtungen 40a, 40b vorgesehen sein, dass eine Seitenkante der Transportbänder 31a, 31b und/oder 41a, 41b als Führungskante dient, die insbesondere mit einer gleichen Seitenkante des Tape-Bandmaterials 2 bzw. der abgeschnittenen Tapes 5a, 5b flüchtig ausgerichtet ist.

Mit Bezug auf die Fig. 3A bis 3K wird nun ein Ablegen von Tapes 5a, 5b mit einem Mindestabstand zum Legen einer großflächigen Bauteillage erläutert, wie dies aus dem Stand der Technik bekannt ist.

Die Fig. 3A zeigt schematisch in einer Draufsicht, wie in einem ersten Arbeitszyklus zunächst von den Zuführungseinrichtungen 30a, 30b jeweils ein Tape 5a, 5b den Legeeinrichtungen 40a, 40b zugeführt wird, so dass jede Legeeinrichtung 40a, 40b an ihrer jeweiligen Unterseite ein Tape 5a, 5b hält. In diesem Beispiel sind die Tapes 5a, 5b von jeweils gleicher Länge und Breite, und die Legeköpfe 7a, 7b sind so eingerichtet und eingestellt, dass die Legeeinrichtungen 40a, 40b die Tapes 5a, 5b in einem vorgegebenen Abstand zueinander halten, wie in der schematischen Ansicht von vorne der Fig. 3B angedeutet, die zeigt, dass die Tapes 5a, 5b jeweils eine Breite B aufweisen, und dass die Tapes 5a, 5b von den Legeeinrichtungen 40a, 40b in einem Abstand, der ebenfalls der Breite B entspricht, positioniert gehalten werden.

Die beiden Legeeinrichtungen 40a, 40b werden dann in vertikaler Richtung 62 abgesenkt (Fig. 3C), bis die Tapes 5a, 5b auf dem Legetisch 50 in Auflage kommen (Fig. 3D). Anschließend werden die Legeeinrichtungen 40a, 40b wieder abgehoben (Fig. 3E). In einem nächsten Schritt werden den Legeeinrichtungen 40a, 40b erneut Tapes 5a, 5b zugeführt (Fig. 3F). Dabei wird gleichzeitig der Legetisch 50 um die Breite B verstellt, wie durch den Pfeil in Fig. 3F angedeutet, so dass die Tapes 5a, 5b, die von den Legeeinrichtungen 40a, 40b gehalten werden, über den Lücken positioniert sind, die von den im ersten Arbeitszyklus abgelegten Tapes 5a, 5b auf dem Legetisch 50 gebildet werden. In dieser Stellung werden nun die Legeeinrichtungen 40a, 40b erneut in vertikaler Richtung 62 abgesenkt (Fig. 3G), bis die Tapes 5a, 5b in den Lücken auf dem Legetisch 50 platziert sind, um eine geschlossene Lage aus nebeneinander abgelegten Tapes 5a, 5b zu bilden (Fig. 3H). Die Legeeinrichtungen 40a, 40b können nun wieder abgehoben werden, und es können diesen weitere Tapes 5a, 5b zugeführt werden, um, gegebenenfalls mit einem weiteren Versatz des Legetischs 50, mit dem Legen einer neuen Lage aus Tapes 5a, 5b zu beginnen (Fig. 3I bis 3K).

Wie in den Fig. 3A bis 3K gezeigt, werden dabei die Tapes 5a, 5b jeweils an einer Seitenkante der Transportbänder 31a, 31b der Zuführungseinrichtungen 30a, 30b, die als Führungskante dient, flüchtig ausgerichtet, wobei in diesem Beispiel die Führungskanten so gewählt und eingerichtet sind, dass die Führungskanten an den zwei Seitenkanten der Transportbänder 31a, 31b ausgebildet sind, die einander zugewandt sind. Mit anderen Worten werden in den Zuführungseinrichtungen 30a, 30b die Tapes 5a, 5b an unterschiedlichen Seitenkanten der Transportbänder 31a, 31b geführt, so dass, wie in Fig. 3B dargestellt, ein erstes Tape 5a in der ersten Legeeinrichtung 40a an einer linken Kante des Transportbandes 41a dieser Legeeinrichtung 40a positioniert wird, während in der zweiten Legeeinrichtung 40b ein Tape 5b an einer rechten Kante des Transportbandes 41b dieser Legeeinrichtung 40b positioniert wird.

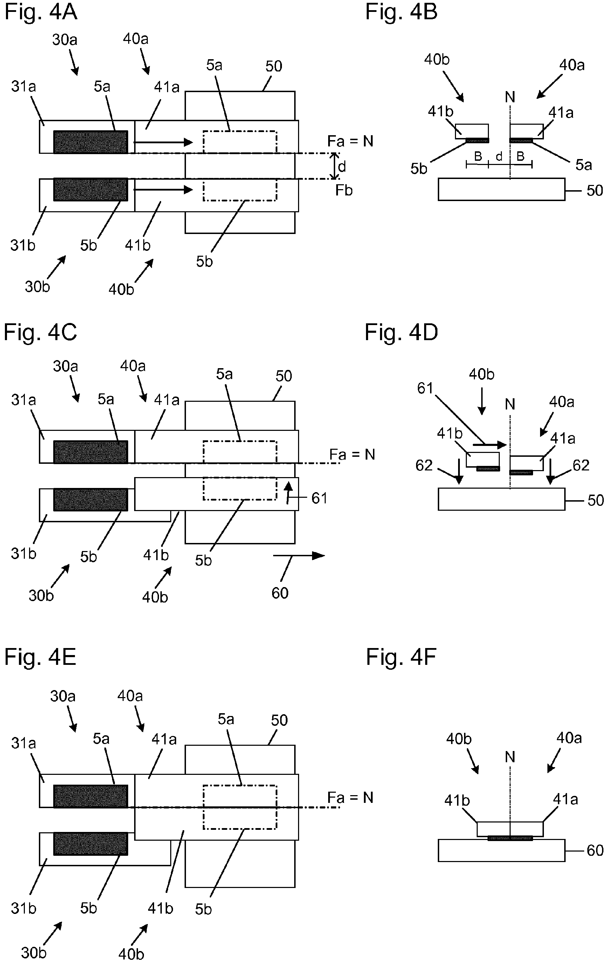

Mit Bezug auf die Fig. 4A bis 4L wird nun ein beispielhaftes Verfahren gemäß der Erfindung gezeigt, welches ein gleichzeitiges Ablegen von Tapes 5a, 5b nebeneinander erlaubt.

In diesem Verfahren werden zunächst, wie in der schematischen Draufsicht von Fig. 4A und der schematischen Vorderansicht von Fig. 4B gezeigt, und ähnlich wie in Fig. 3A und 3B gezeigt, zunächst wieder von den Zuführungseinrichtungen 30a, 30b jeweils ein Tape 5a, 5b den Legeeinrichtungen 40a, 40b zugeführt, so dass jede Legeeinrichtung 40a, 40b an ihrer jeweiligen Unterseite ein Tape 5a, 5b hält.

In diesem Beispiel dient eine Seitenkante der ersten Zuführungseinrichtung 30a als eine erste Führungskante Fa, an der das erste Tape 5a in der ersten Zuführungseinrichtung 30a an der entsprechenden Seitenkante des Tapes 5a ausgerichtet wird. Ebenfalls dient eine Seitenkante der zweiten Zuführungseinrichtung 30b als eine zweite Führungskante Fb, an der das Tape 5b in der zweiten Zuführungseinrichtung 30b an der entsprechenden Seitenkante des Tapes 5b ausgerichtet wird. Die erste Führungskante Fa und die zweite Führungskante Fb sind dabei in diesem Beispiel an unterschiedlichen, einander zugewandten Seiten der Zuführungseinrichtungen 30a, 30b vorgesehen. Zwischen den Führungskanten Fa und Fb, und somit auch zwischen den entsprechenden Seitenkanten der Tapes 5a, 5b, die von der ersten Legeeinrichtung 40a und der zweiten Legeeinrichtung 40b aufgenommen wurden, besteht dabei ein Abstand d, der von der Positionierung der ersten Zuführungseinrichtung 30a und der zweiten Zuführungseinrichtung 30b zueinander vorgegeben ist.

Anschließend werden die Legeeinrichtungen 40a, 40b in vertikaler Richtung 62 abgesenkt (Fig. 4C und 4D). Im Unterschied zur Fig. 3C erfolgt dabei jedoch gleichzeitig eine Bewegung der zweiten Legeeinrichtung 40b, und damit des Transportbandes 41b, in einer Querrichtung 61, wie durch die horizontalen Pfeile in Fig. 4C und 4D angedeutet. Die Querrichtung 61 bezeichnet dabei eine Richtung, die in der Ebene des von der Legeeinrichtung 40b gehaltenen Tapes 5b liegt, und die senkrecht zur Produktionsrichtung 60 des von der Legeeinrichtung 40b gehaltenen Tapes 5 steht. Anders ausgedrückt erfolgt die Querbewegung in einer Querrichtung 61 senkrecht zur Längsrichtung des Transportbandes 41b und in der Ebene des Transportbandes 41b der zweiten Legeeinrichtung 40b. Ausgehend von der Position der zweiten Legeeinrichtung 40b, in der die Legeeinrichtung 40b das Tape 5b von der zweiten Zuführungseinrichtung 30b aufgenommen hat (vgl. Fig. 4A, 4B), welche als Aufnahmeposition bezeichnet werden kann, wird daher während des Absenkens der Legeeinrichtungen 40a, 40b in vertikaler Richtung 62 auf den Legetisch 50 die zweite Legeeinrichtung 40b gleichzeitig in Querrichtung 61 hin zur ersten Legeeinrichtung 40a bewegt, wodurch die von den Legeeinrichtungen 40a, 40b gehaltenen Tapes 5a, 5b seitlich aufeinander zu bewegt werden und der Abstand d bzw. die "Lücke" zwischen den Tapes 5a, 5b verkleinert wird. Diese Bewegung der zweiten Legeeinrichtung 40b in Querrichtung 61 und hin zur ersten Legeeinrichtung 40a während des Absenkens der Legeeinrichtungen 40a, 40b in vertikaler Richtung 62 erfolgt derart, dass die von den Legeeinrichtungen 40a, 40b gehaltenen Tapes 5a, 5b unmittelbar nebeneinander, das heißt Stoß an Stoß auf dem Legetisch 50 zur Ablage kommen (Fig. 4E, 4F). Die Position in Querrichtung 61 der zweiten Legeeinrichtung 40b, in der die gewünschte Ablage des von der zweiten Legeeinrichtung 40b gehaltenen Tapes 5b erfolgt (vgl. Fig. 4E, 4F), wird hiernach als Ablegeposition bezeichnet.

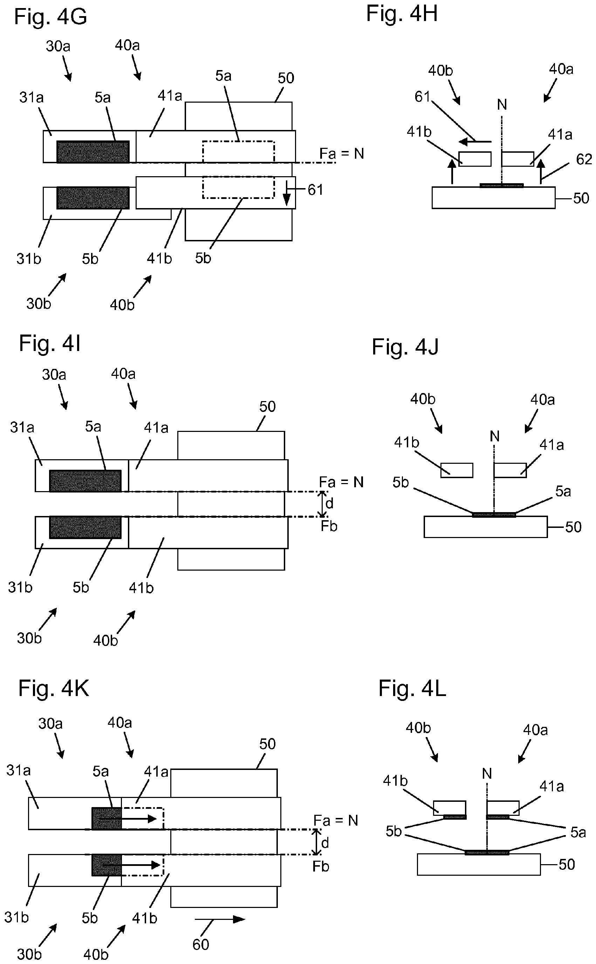

Nach dem Ablegen der Tapes 5a, 5b auf dem Legetisch 50 werden die Legeeinrichtungen 40a, 40b aus der Ablegeposition wieder in die Aufnahmeposition verfahren (vgl. Fig. 4G und 4H). Hierzu wird die Legeeinrichtung 40a in vertikaler Richtung 62 bewegt, die Legeeinrichtung 40b wird sowohl in vertikaler Richtung 62 als auch in Querrichtung 61 bewegt, so dass die Tapelegevorrichtung 1 wieder in der Aufnahmeposition zur Aufnahme weiter Tapes 5a, 5b steht, wie dies in Figur 4I und 4J dargestellt ist. Die in Figur 4I dargestellte Aufnahmeposition entspricht auch der Ausgangsposition, wie sie in Figur 4A ebenfalls dargestellt ist. Ausgehend von dieser Stellung von Zuführeinrichtung 30a, 30b und Legeeinrichtung 40a, 40b können nun weitere Tapes 5a, 5b von der Legeeinrichtung 40a, 40b aufgenommen werden (vgl. Fig. 4K und 4L) und der Prozess einschließlich Querbewegung, dargestellt ab Fig. 4C kann wieder von neuem für die weiteren Tapes 5a, 5b beginnen.

Um diese Bewegung der zweiten Legeeinrichtung 40b in Querrichtung 61 zu ermöglichen, ist die zweite Legeeinrichtung 40b so ausgebildet, dass sie in der Querrichtung 61 verfahrbar ist. Beispielsweise kann dies so ausgeführt werden, dass die zweite Legeeinrichtung 40b an einer Querverfahreinrichtung (nicht dargestellt), wie beispielsweise einer von einem Servomotor angetriebenen Linearachse, befestigt ist, und die Querverfahreinrichtung von der Steuereinrichtung so angesteuert und/oder geregelt wird, die zweite Legeeinrichtung 40b in der Querrichtung 61 auf gewünschte, von der Steuereinrichtung vorgegebene Positionen zu verfahren und insbesondere zu positionieren, und insbesondere die zweite Legeeinrichtung 40b in Querrichtung 61 zwischen der Aufnahmeposition und der Ablegeposition zu verfahren. Die Steuereinrichtung kann dabei so eingerichtet und/oder programmiert sein, die Legeeinrichtungen 40a, 40b, und insbesondere die Querverfahreinrichtung der zweiten Legeeinrichtung 40b so anzusteuern, dass eine Positionierung der Tapes 5a, 5b, die von der ersten Legeeinrichtung 40a und der zweiten Legeeinrichtung 40b gehalten werden, relativ zu einer virtuellen Nulllinie N erfolgt. Besonders vorteilhaft ist dabei, dass vorgesehen wird, dass die virtuelle Nulllinie N mit einer der Führungskanten Fa, Fb zusammenfällt, und insbesondre mit der Führungskante Fa zusammenfällt, die mit der nicht in Querrichtung 61 zu verfahrenden Legeeinrichtung, hier der ersten Legeeinrichtung 40a, assoziiert ist. Die Verwendung einer derartigen virtuellen Nulllinie stellt eine wohldefinierte Referenz für die Positionierung der Tapes 5a, 5b relativ zueinander, als auch relativ zum Koordinatensystem des Legetischs 50 dar, was eine programmtechnisch einfache und zuverlässige, genaue Positionierung und Ablage der Tapes 5a, 5b verwirklicht werden kann. Von besonderem Vorteil ist hierbei, dass die Lage der virtuellen Nulllinie N nicht von der Breite B der verwendeten Tape-Bandmaterialien 2 abhängt. Dies ist insbesondere von Vorteil, wenn Tape-Bandmaterialien 2 unterschiedlicher Breite B, insbesondere in raschem Wechsel, von der Tapelegevorrichtung 1 verarbeitet werden sollen. Mit anderen Worten kann, unabhängig von der Breite B der eingesetzten Tape-Bandmaterialien 2 und damit einhergehend der jeweiligen Breite B der Tapes 5a, 5b, eine Ablage der Tapes 5a, 5b Stoß an Stoß erfolgen, indem die Steuereinrichtung die Querbewegung der zweiten Legeeinrichtung 40b so ansteuert, dass die zweite Legeeinrichtung 40b mit der entsprechenden Seitenkante auf einen Abstand von Null zur virtuellen Nulllinie N verfahren wird.

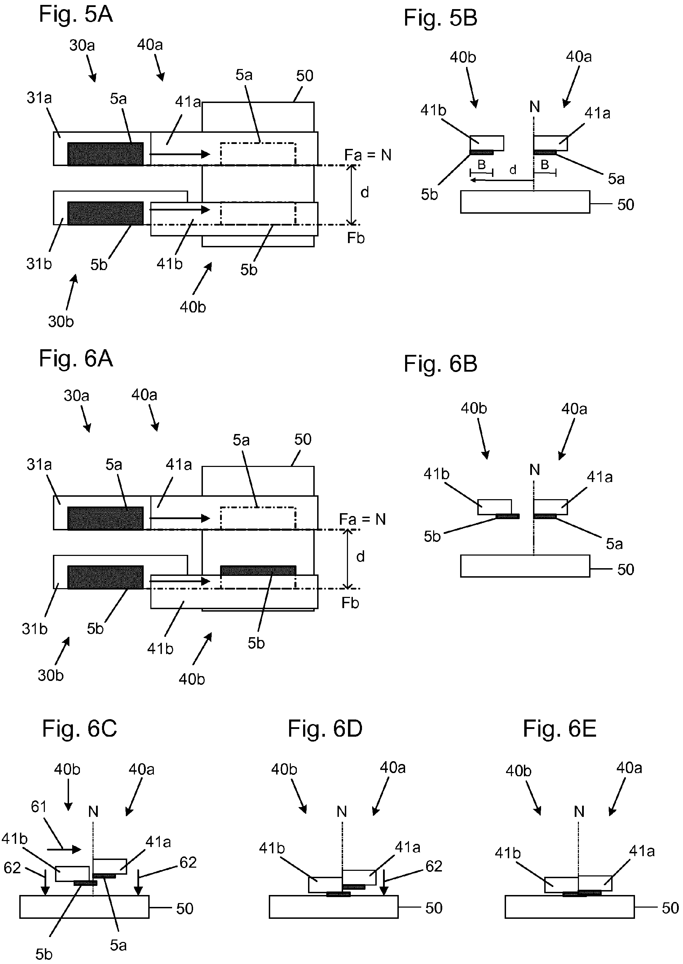

Die vorstehend beschriebene Wahl der Führungskanten Fa, Fb wie in Fig. 4A und 4B gezeigt ist nicht beschränkend, und es sind auch andere Wahlen möglich. Ein entsprechendes Beispiel ist in den Fig. 5A und 5B dargestellt, wobei in diesem Beispiel zwei gleiche Seitenkanten der ersten Zuführungseinrichtung 30a und zweiten Zuführungseinrichtung 30b als Führungskanten Fa, Fb dienen. Die Führungskante Fa dient wiederum als virtuelle Nulllinie N und der Abstand zwischen den Führungskanten Fa und Fb wird wiederum als Abstand d bezeichnet. In diesem Fall ist entsprechend die "Lücke" als der Abstand zwischen den Tapes5a, 5b in de Zuführungseinrichtung 30a, 30b bzw. in den Legeeinheiten 40a, 40b gleich d - B, wobei B wiederum die Breite des Tapes 5b bezeichnet, die von der zweiten Legeeinrichtung 40b gehalten wird. Zur Ablage der Tapes 5a, 5b Stoß an Stoß kann dies von der Steuereinrichtung derart berücksichtigt werden, dass die zweite Legeeinrichtung 40b ausgehend von der Aufnahmeposition in eine Ablageposition derart bewegt wird, dass in der Ablageposition die Seitenkante der zweiten Legeeinrichtung 40b, die mit der Führungskante Fb assoziiert ist, in diesem Fall nicht "auf Null" gefahren wird, sondern auf einen Abstand entsprechend der Breite B des Materials des Tapes 5b.

Eine derartige Zufuhr der Tapes 5a, 5b und damit einhergehend die Wahl der Führungskanten Fa, Fb kann insbesondere aus anlagetechnischen oder wartungstechnischen Gründen vorteilhaft sein. Insbesondere kann auf diese Weise vermieden werden, dass der erste und der zweite Legekopf 7a, 7b unterschiedlich aufgebaut sind, beispielsweise auf Grund von an unterschiedlichen Seiten angeordneten Leitblechen, und/oder dass der jeweilige Materialtransport an unterschiedlichen Seiten zugeführt und eingerichtet werden muss. Es kann so ein Höchstmaß an Einheitlichkeit erreicht werden, was die Ersatzteillagerung und Wartung vereinfacht und auch die Wahrscheinlichkeit von durch Bedienpersonal verursachten Fehlern senken kann.

Während im Vorstehenden eine Ablage von Tapes 5a, 5b Stoß an Stoß beschrieben wurde, ist dies nicht beschränkend. Vielmehr erlaubt die variable Querverfahrbarkeit der zweiten Legeeinrichtung 40b gemäß der vorliegenden Erfindung einen variablen, frei programmierbaren Querversatz in Querrichtung 61. So können, durch eine entsprechende Programmierung der Steuereinrichtung, die Tapes 5a, 5b auch in einem beliebig vorgebbaren Abstand von beispielsweise 1 mm, 2 mm, 3 mm, 4 mm, 5 mm oder mehr abgelegt werden, so dass nach Ablage der Tapes 5a, 5b ein entsprechender Spalt zwischen diesen verbleibt.

Umgekehrt ist es ebenfalls möglich, mit einer entsprechenden Programmierung der Steuereinrichtung, die Tapes 5a, 5b so auf dem Legetisch 50 abzulegen, dass sich diese über eine Breite von beispielsweise 1 mm, 2 mm, 3 mm, 4 mm, 5 mm oder mehr überlappen. Für kleine Überlappungen und/oder abhängig von der Konstruktion der Legeeinrichtungen 40a, 40b kann es hierbei ausreichen, dass die Steuereinrichtung die zweite Legeeinrichtung 40b um den entsprechenden Überlappungswert über die virtuelle Nulllinie hinaus bewegt. Dabei kann es, um eine Kollision der beiden Legeeinrichtungen 40a, 40b zu vermeiden, vorteilhaft sein, dass während dem Absenken der Legeeinrichtungen 40a, 40b die Ablegehübe relativ zueinander um wenige zehntel Sekunden versetzt bzw. mit einigen Millimeter Höhenversatz erfolgen. Der zeitliche Versatz in den jeweiligen Ablegehüben in die Ablegeposition beträgt vorzugsweise 0,1 bis 0,4 Sekunde besonders bevorzugt 0,2 Sekunden bis 0,3 Sekunden, wobei die zweite Legeeinrichtung 40b, welche die Querbewegung in Querrichtung 61 durchführt, der ersten Legeeinrichtung 40a nachfolgt. Dies hat den weiteren Vorteil, dass auf diese Weise klar definiert ist, welcher der Tapes 5a, 5b oben und welcher unten zu liegen kommt.

Werden größere Überlappungen der Tapes 5a, 5b gewünscht und/oder kann, selbst bei kleinen Überlappungen auf Grund der maschinellen Konstruktion die Gefahr von Kollisionen bestehen, dann kann ein Verfahren angewandt werden, wie es beispielhaft mit Bezug auf die Fig. 6A bis 6E beschrieben ist.

Die Fig. 6A und 6B stellen schematisch die Situation bei der Aufnahme der Tapes 5a, 5b durch die Legeeinrichtungen 40a, 40b gemäß dieser besonderen Ausführungsform dar. Wie in Fig. 6A und 6B gezeigt, erfolgt dabei die Art der Materialzufuhr in den Zuführungseinrichtungen 30a, 30b und die Wahl der Führungskanten Fa, Fb wie im Fall des Beispiels der Fig. 5A und 5B. Dies ist jedoch nicht beschränkend, und eine andere Wahl, wie beispielsweise in den Fig. 4A und 4B dargestellt, ist entsprechend ebenfalls möglich.

Im Unterschied zu den Fig. 5A und 5B wird in dem Verfahren gemäß diesem Beispiel jedoch die zweite Legeeinrichtung 40b zur Aufnahme des zweiten Tapes 5b von der zweiten Zuführungseinrichtung 30b mit einem Versatz in Querrichtung 61 positioniert, so dass das aufgenommene Tape 5b seitlich über die zweite Legeeinrichtung 40b hinaussteht. Der Überstand kann dabei bevorzugt der gewünschten Überlappung entsprechen.

Nachdem die Tapes 5a, 5b derart von der ersten Legeeinrichtung 40a und der zweiten Legeeinrichtung 40b aufgenommen wurden, erfolgt die Ablage der beiden Tapes 5a, 5b, wie in den Fig. 6C bis 6E dargestellt. Dabei wird, wie dargestellt, das Absenken der Legeeinrichtungen 40a, 40b in vorteilhafter Weise nicht synchron durchgeführt, sondern mit einem kleinen zeitlichen Versatz von wenigen Zehntelsekunden bzw. einem kleinen Höhenversatz von wenigen Millimetern. Der zeitliche Versatz kann wiederum in einem Bereich von 01, bis 0,4 Sekunden, bevorzugt in einem Bereich von 02, bis 0,3 Sekunden liegen. Die Ablegebewegung der zweiten Legeeinrichtung 40b in vertikaler Richtung 62 eilt so der vertikalen Ablegebewegung der ersten Legeeinrichtung 40a voraus, so dass das von der zweiten Legeeinrichtung 40b gehaltene Tape 5b unter dem von der ersten Legeeinrichtung 40a gehaltenen Tape 5b positioniert wird und zur Ablage kommt, so dass die Tapes 5a, 5b mit der gewünschten Überlappung und mit einer wohldefinierten Reihenfolge auf dem Legetisch 50 abgelegt werden.

Während im Vorstehenden beschrieben wurde, die Querbewegung der zweiten Legeeinrichtung 40b gleichzeitig mit dem Absenken der zweiten Legeeinrichtung 40b auszuführen, ist es ebenfalls möglich, dass die Querbewegung der zweiten Legeeinrichtung 40b zumindest teilweise erfolgt, bevor die Ablegebewegung beginnt. Beispielsweise kann die zweite Legeeinrichtung 40b zunächst den notwendigen Querversatz mittels der Querbewegung ausführen, nachdem das Tape 5b vollständig an die zweite Legeeinrichtung 40b übergeben wurde, und anschließend die Ablegebewegung ausführen.

Während im Vorstehenden lediglich die zweite Legeeinrichtung 40b als in der Querrichtung 62 verfahrbar beschrieben wurde, während die erste Legeeinrichtung 40a nicht in Querrichtung verfahrbar ausgestaltet ist, ist dies nicht beschränkend, und es ist ebenfalls möglich, die erste Legeeinrichtung 40a in Querrichtung 62 verfahrbar auszugestalten, während die zweite Legeeinrichtung 40b in Querrichtung 62 nicht verfahrbar ausgestaltet ist. Ebenfalls ist es möglich, sowohl die erste Legeeinrichtung 40a als auch die zweite Legeeinrichtung 40b in Querrichtung 62 verfahrbar auszugestalten. Eine derartige doppelte Verfahrbarkeit in Querrichtung 62 bietet den Vorteil einer größeren Flexibilität bei der Aufnahme und/oder Positionierung zur Ablage der von der ersten Legeeinrichtung 40a und der zweiten Legeeinrichtung 40b gehaltenen Tapes 5a, 5b.

Die hierin beschriebene einfache oder doppelte Verfahrbarkeit der ersten und/oder zweiten Legeeinrichtung 40a, 40b in Querrichtung 62 ist nicht auf die vorstehend beschriebene Anwendung zum Legen von Tapes 5a, 5b unmittelbar nebeneinander, mit Überlappung oder mit kleiner Lücke beschränkt. Vielmehr kann die hierin beschriebene einfache oder doppelte Verfahrbarkeit der ersten und/oder zweiten Legeeinrichtung 40a, 40b in Querrichtung 62 ebenfalls vorteilhaft zum Legen von Tapes 5a, 5b auf eine vordefinierte und variable Lücke, wie beispielsweise in Anlehnung auf die Fig. 3A bis 3K beschrieben, verwendet werden. Dies kann insbesondere nützlich sein, wenn mit den Legeeinrichtungen 40a und/oder 40b in raschem Wechsel Tape-Bandmaterialien 2, bzw. davon abgetrennte Tapes 5a, 5b mit unterschiedlicher, wechselnder Breite B gelegt werden sollen. In einem derartigen Fall ist es nicht notwendig, die relative Position der Legeköpfe 7a, 7b zueinander auf die sich ändernden Breiten B einzustellen und anzupassen. Vielmehr erlaubt die (einfache oder doppelte) Verfahrbarkeit der ersten und/oder zweiten Legeeinrichtung 40a, 40b in Querrichtung 62, dass, ohne eine entsprechende Justierung der Legeköpfe 7a, 7b vorzunehmen, die Legeeinrichtungen 40a, 40b mittels einer entsprechenden Ansteuerung der jeweiligen gewünschten bzw. erforderlichen Aufnahmepositionen in Querrichtung 62 die Tapes 5a, 5b in den jeweils von den Zuführungseinrichtungen 30a, 30b vorgegebenen relativen Lagen zueinander aufzunehmen, und mittels einer entsprechenden Ansteuerung der jeweiligen gewünschten bzw. erforderlichen Ablegepositionen in Querrichtung 62 sicherzustellen, dass auch bei sich ändernden Breiten B der Tapes 5a, 5b ein jeweils gewünschter bzw. erforderlicher Abstand der Tapes 5a, 5b bei der Ablage auf dem Legetisch 50 eingehalten wird, um, wie in den Fig. 3A bis 3K gezeigt, in einem nächsten Zyklus diese Lücken mit Tapes 5a, 5b lückenlos auffüllen zu können. So kann beispielsweise eine erste Lage mit Tapes 5a, 5b mit einer Breite B von beispielsweise 50 mm gelegt werden, wobei die Legeköpfe 7a, 7b so eingestellt sind, dass ein Abstand der Tapes 5a, 5b bzw. der Legeeinheiten 40a, 40b zueinander ebenfalls dieser Breite B von 50 mm entspricht, wie beispielsweise in Fig. 3A und 3B gezeigt, und es kann dann beispielsweise, unter Wechsel beispielsweise zu einem Tape-Bandmaterial 2 von 35 mm Breite, und ohne eine Verstellung der Legeköpfe 7a, 7b in ihrem relativen Abstand zueinander vorzunehmen, eine zweite Lage mit Tapes 5q, 5b mit der geänderten Breite B von in diesem Beispiel 35 mm gelegt werden, indem beispielsweise die zweite Legeeinrichtung 40b, ähnlich dem Ausführungsbeispiel der Fig. 4A bis 4E, das Tape 5b von der Zuführungseinrichtung 30b in der Aufnahmeposition aufnimmt und das Tape 5b der Breite 35 mm auf der Zuführungseinrichtung 30b in einem Abstand von 50 mm von dem Tape 5a auf der Zuführungseinrichtung 30a geführt wird, und dann die zweite Legeeinrichtung 40b vor und/oder während des Absenkens in der Querrichtung 62 zu einer Ablegeposition bewegt wird, wobei die Ablegeposition in Querrichtung 62 so bestimmt ist, dass in dieser Ablegeposition die erste Legeeinrichtung 40a und die zweite Legeeinrichtung 40b die jeweiligen Tapes 5a, 5b in dem gewünschten bzw. erforderlichen Abstand zueinander von 35 mm zur Ablage bringen.

Daneben ist es mit der (einfachen oder doppelten) Verfahrbarkeit der ersten und/oder zweiten Legeeinrichtung 40a, 40b in Querrichtung 62 ebenfalls möglich, je nach Anforderung und wie jeweils durch das Legeprogramm der Steuereinrichtung vorgegeben, die Tapes 5a, 5b mittels der Legeeinrichtungen 40a, 40b in nach Breite B und Reihenfolge gewünschter Überlappung oder mit gewünschter (kleiner) Lücke zu legen, sowohl kontinuierlich für alle zu legenden Tapes 5a, 5b als auch vorteilhaft in raschem Wechsel, je nach Erfordernissen des zu legenden Bauteils und entsprechend dem von der Steuereinrichtung ausgeführten Legeprogramm.

Es ist darüber hinaus auch möglich, die Transportbänder 21a, 21 b, 31a, 31 b, 41a, 41b durch andere Arten von flächigen Transportelementen zu ersetzen. So kann zum Beispiel an Stelle dieser Transportbänder 21a, 21b, 31a, 31b, 41a, 41b jeweils ein flächiges, insbesondere plattenförmiges Transportelement vorgesehen sein, mit einer plattenförmigen Auflagefläche, die in und entgegen der Produktionsrichtung 60 des Tape-Bandmaterials 2 bzw. der Tapes 5a, 5b verfahrbar ist. Beispielhaft kann das flächige Transportelement als eine Metallplatte, eine Kunststoffplatte, eine mit einem Kunststoff oder einem anderen Material beschichtete oder überzogene Metallplatte oder Kunststoffplatte ausgeführt sein, die mittels einer Linearführung gelagert und geführt wird, und die mittels einem Verfahrantrieb parallel zur Transportrichtung des Tape-Bandmaterials 2 bzw. der Tapes 5a, 5b hin- und her bewegt werden kann. Das Tape-Bandmaterial 2 und/oder die abgetrennten Tapes 5a, 5b kommen dabei auf der von der Oberfläche des plattenförmigen Transportelements gebildeten Auflagefläche zur Ablage. Das plattenförmige Transportelement kann insbesondere auch mit einer Vakuumeinrichtung verbunden werden, wobei die Vakuumeinrichtung einen Unterdruck erzeugt, mit dem das Tape-Bandmaterial 2 und/oder die abgetrennten Tapes 5a, 5b auf der Auflagefläche gehalten werden. Für die Legeeinrichtungen 40a, 40b können dabei wiederum ebenfalls Ultraschall-Schweißvorrichtungen vorgesehen werden, welche durch entsprechende Öffnungen in dem plattenförmigen Transportelement eingebracht werden können.

Weiter ist es ebenfalls möglich, die erste Schneideinheit 20a und die erste Zuführungseinheit 30a integral als eine Einheit auszubilden, und/oder die zweite Schneideinheit 20b und die zweite Zuführungseinheit 30b integral als eine Einheit auszubilden. Umgekehrt können zwischen der ersten Schneideinheit 20a und der ersten Legeeinheit 40a und/oder zwischen der zweiten Schneideinheit 20b und der zweiten Legeeinheit 40b jeweils mehrere Zuführungseinheiten vorzusehen.

Schließlich ist es ebenfalls möglich, mehr als zwei Legeeinheiten 40a, 40b vorzusehen, und insbesondere mehr als zwei in Querrichtung 62 verfahrbare Legeeinheiten 40a, 40b vorzusehen, mit jeweils zugeordneten Schneideinrichtungen 20a, 20b und Zuführungseinrichtungen 30a, 30b. Auf diese Weise kann es möglich sein, die Legerate und die Flexibilität der Tapelegevorrichtung 1 weiter zu erhöhen.

### Bezugszeichenliste P1526

- 1: Tapelegevorrichtung
- 2: Tape-Bandmaterial
- 5a, 5b: Tape
- 7a, 7b: Legekopf
- 10a, 10b: Materialzufuhreinheit
- 11a,: 11b Antriebswalzen
- 12a, 12b: Spule
- 20a, 20b: Schneideinrichtung
- 21a, 21b: Transportband
- 22: Umlenkrollen
- 25a, 25b: Schneidmesser
- 30a, 30b: Zuführeinrichtung
- 31a, 31b: Transportband
- 32: Umlenkrollen
- 33: Abwurfbehälter
- 40a, 40b: Legeeinrichtung
- 41a, 41b: Transportband
- 42: Umlenkrollen
- 50: Legetisch
- 60: Produktionsrichtung
- 61: Querrichtung
- 62: Hubrichtung
- B: Materialbreite
- d: Abstand
- Fa, Fb: Führungskanten
- N: virtuelle Nulllinie

## Patentansprüche

1. Tapelegevorrichtung (1), umfassend
eine erste Materialzuführungseinheit (10a) zum Zuführen eines Tape-Bandmaterials (2),
eine erste Schneideinrichtung (20a) zum Abtrennen eines ersten Tapes(5a) von dem Tape-Bandmaterial (2),
eine erste Legeeinrichtung (40a) zum Aufnehmen und zum Platzieren des von der ersten Schneideinrichtung (20a) abgetrennten ersten Tapes (5a) auf einem Legetisch (50),
eine zweite Materialzuführungseinheit (10b) zum Zuführen eines Tape-Bandmaterials (2),
eine zweite Schneideinrichtung (20b) mit einem Schneidmittel zum Abtrennen eines zweiten Tapes (5b) von dem Tape-Bandmaterial (2),
eine zweite Legeeinrichtung (40b) zum Aufnehmen und zum Platzieren des von der zweiten Schneideinrichtung (20b) abgetrennten zweiten Tapes (5b) auf dem Legetisch (50), und
eine Steuereinrichtung zum Steuern und/oder Regeln des Betriebs der Tapelegevorrichtung,
**dadurch gekennzeichnet, dass**
die erste Legeeinrichtung (40a) und/oder die zweite Legeeinrichtung (40b) eingerichtet sind, eine Querbewegung in einer Querrichtung (61) auszuführen, und die Steuereinrichtung eingerichtet ist, die Querbewegung der ersten Legeeinrichtung (40a) und/oder der zweiten Legeeinrichtung (40b) zu steuern und/oder zu regeln.

2. Tapelegevorrichtung (1) nach Anspruch 1, **dadurch gekennzeichnet, dass** die Steuereinrichtung eingerichtet ist, die Querbewegung der ersten Legeeinrichtung (40a) und/oder der zweiten Legeeinrichtung (40b) derart zu steuern und/oder zu regeln, dass das erste Tape (5a) und das zweite Tape (5b) Stoß an Stoß, mit einer vorgegebenen Überlappung oder mit einer vorgegebenen Lücke auf dem Legetisch (50) platziert werden.

3. Tapelegevorrichtung (1) nach einem der vorstehenden Ansprüche, **dadurch gekennzeichnet, dass** die Steuereinrichtung eingerichtet ist, die erste Legeeinrichtung (40a) und die zweite Legeeinrichtung (40b) so zu steuern und/oder zu regeln, dass die Querbewegung der ersten Legeeinrichtung (40a) und/oder der zweiten Legeeinrichtung (40b) zumindest teilweise gleichzeitig mit einem Absenken der ersten Legeeinrichtung (40a) und der zweiten Legeeinrichtung (40b) zum Platzieren des ersten Tapes (5a) und des zweiten Tapes (5b) auf dem Legetisch (50) erfolgt.

4. Tapelegevorrichtung (1) nach einem der vorstehenden Ansprüche, **dadurch gekennzeichnet, dass** die Steuereinrichtung eingerichtet ist, das Absenken der ersten Legeeinrichtung (40a) und der zweite Legeeinrichtung (40b) zum Platzieren des ersten Tapes (5a) und des zweiten Tapes (5b) auf dem Legetisch (50) so zu steuern und/oder zu regeln, dass das Absenken der zweiten Legeeinrichtung (40b) mit einem zeitlichen Versatz oder mit einem Höhenversatz relativ zum Absenken der ersten Legeeinrichtung (40a) erfolgt.

5. Tapelegevorrichtung (1) nach einem der vorstehenden Ansprüche, **dadurch gekennzeichnet, dass** eine Seitenkante der ersten Schneideinrichtung (20a) oder eine Seitenkante einer zwischen der ersten Schneideinrichtung (20a) und der ersten Legeeinrichtung (40a) angeordneten ersten Zuführungseinrichtung (30a) als eine erste Führungskante (Fa) dient, an welcher eine Seitenkante des Tape-Bandmaterials (2) und/oder des ersten Tapes (5a) flüchtig ausgerichtet ist, und eine Seitenkante der zweiten Schneideinrichtung (20b) oder eine Seitenkante einer zwischen der zweiten Schneideinrichtung (20b) und der zweiten Legeeinrichtung (40b) angeordneten zweiten Zuführungseinrichtung (30b) als eine zweite Führungskante (Fb) dient, an welcher eine Seitenkante des Tape-Bandmaterials (2) und/oder des zweiten Tapes (5b) flüchtig ausgerichtet ist.

6. Tapelegevorrichtung nach Anspruch 5, **dadurch gekennzeichnet, dass** die erste Führungskante (Fa) oder die zweite Führungskante (Fb) als virtuelle Nulllinie (N) dient und die Steuereinrichtung eingerichtet ist, die Querbewegung in Querrichtung (61) der ersten Legeeinrichtung (40a) und/oder der zweiten Legeeinrichtung (40b) relativ zur Nulllinie (N) zu steuern und/oder zu regeln.

7. Tapelegevorrichtung (1) nach einem der vorstehenden Ansprüche, **dadurch gekennzeichnet, dass** die erste Legeeinrichtung (40a) und die zweite Legeeinrichtung (40b) jeweils zumindest eine Hefteinrichtung, insbesondere eine Ultraschalleinrichtung aufweisen, die eingerichtet ist, das erste Tape (5a) bzw. zweite Tape (5b) nach dem Platzieren auf dem Legetisch (50) an einer darunter liegenden Tapelage anzuheften.

8. Tapelegevorrichtung (1) nach einem der vorstehenden Ansprüche, **dadurch gekennzeichnet, dass** die erste Legeeinrichtung (40a), die zweite Legeeinrichtung (40b), die erste Schneideinrichtung (20a), die zweite Schneideinrichtung (20b), eine zwischen der ersten Schneideinrichtung (20a) und der ersten Legeeinrichtung (40a) angeordnete erste Zuführungseinrichtung (30a) und/oder eine zwischen der zweiten Schneideinrichtung (20b) und der zweiten Legeeinrichtung (40b) angeordnete zweite Zuführungseinrichtung (30b) jeweils ein flächiges Transportelement aufweist, wobei das Tape-Bandmaterial (2) bzw. das erste Tape (5a) bzw. zweite Tape (5b) auf einer Oberfläche des flächigen Transportelements transportiert wird.

9. Tapelegevorrichtung (1) nach Anspruch 8, **dadurch gekennzeichnet, dass** das flächige Transportelement als ein um Umlenkrollen (22a, 22b, 32a, 32b, 42a, 42b) umlaufendes, endloses Transportband (21a, 21b, 31a, 31b, 41a, 41b) ausgeführt ist und/oder dass das flächige Transportelement eine plattenförmige Auflagefläche aufweist, die in und entgegen der Produktionsrichtung (60) des Tape-Bandmaterials (2) bzw. des ersten Tapes (5a) bzw. zweiten Tapes (5b) verfahrbar ist.

10. Tapelegevorrichtung (1) nach einem der Ansprüche 8 oder 9, **dadurch gekennzeichnet, dass** weiter eine Vakuumeinrichtung vorgesehen ist, welche mit dem flächigen Transportelement derart verbunden ist, um das Tape-Bandmaterial (2) und/oder das erste Tape (5a) bzw. zweite Tape (5b) mittels von der Vakuumeinrichtung erzeugten Unterdruck auf dem flächigen Transportelement zu halten.

11. Tapelegeverfahren, umfassend:
Zuführen von Tape-Bandmaterial (2) in eine erste Schneideinrichtung (20a), und
Zuführen von Tape-Bandmaterials (2) in eine zweite Schneideinrichtung (20b),
Abtrennen eines ersten Tapes (5a) von dem Tape-Bandmaterial (2) mittels der ersten Schneideinrichtung (20a), und Abtrennen eines zweiten Tapes (5b) von dem Tape-Bandmaterial (2) mittels der zweiten Schneideinrichtung (20b),
Aufnehmen des ersten Tapes (5a) mittels einer ersten Legeeinrichtung (40a), und
Aufnehmen des zweiten Tapes (5b) mittels einer zweiten Legeeinrichtung (40b), und
Platzieren des ersten Tapes (5a) und des zweiten Tapes (5b) mittels der ersten und der zweiten Legeeinrichtung (40a, 40b) auf einem Legetisch (50),
**dadurch gekennzeichnet, dass**
nach Aufnehmen des zweiten Tapes (5b) mittels der zweiten Legeeinrichtung (40b) und vor dem Platzieren des zweiten Tapes (5b) auf dem Legetisch (50) die zweite Legeeinrichtung (40b) in einer Querrichtung (61) bewegt wird.

12. Tapelegeverfahren nach Anspruch 11, **dadurch gekennzeichnet, dass** die Querbewegung in Querrichtung (61) der zweiten Legeeinrichtung (40b) derart vorgenommen wird, dass das erste Tape (5a) und das zweite Tape (5b) Stoß an Stoß, mit einer vorgegebenen Überlappung oder mit einer vorgegebenen Lücke auf dem Legetisch (50) platziert werden.

13. Tapelegeverfahren nach einem der Ansprüche 11 oder 12, **dadurch gekennzeichnet, dass** die erste Legeeinrichtung (40a) und/oder die zweite Legeeinrichtung (40b) zumindest teilweise gleichzeitig mit einem Absenken der ersten Legeeinrichtung (40a) und/oder der zweiten Legeeinrichtung (40b) zum Platzieren des ersten Tapes (5a) und des zweiten Tapes (5b) auf dem Legetisch (50) in einer Querrichtung (61) bewegt wird.

14. Tapelegeverfahren nach einem der Ansprüche 11 bis 13, **dadurch gekennzeichnet, dass** die zweite Legeeinrichtung (40b) mit einem zeitlichen Versatz, vorzugsweise von 0,1 bis 0,4 Sekunden, besonders bevorzugt von 0,2 bis 0,3 Sekunden, oder mit einem Höhenversatz relativ zum Absenken der ersten Legeeinrichtung (40a) abgesenkt wird.

15. Tapelegeverfahren nach einem der Ansprüche 11 bis 14, **dadurch gekennzeichnet, dass** eine Seitenkante der ersten Schneideinrichtung (20a) oder eine Seitenkante einer zwischen der ersten Schneideinrichtung (20a) und der ersten Legeeinrichtung (40a) angeordneten ersten Zuführungseinrichtung (30a) als eine erste Führungskante (Fa) dient, an welcher eine Seitenkante des Tape-Bandmaterials (2) und/oder des ersten Tapes (5a) flüchtig ausgerichtet ist, und eine Seitenkante der zweiten Schneideinrichtung (20b) oder eine Seitenkante einer zwischen der zweiten Schneideinrichtung (20b) und der zweiten Legeeinrichtung (40b) angeordneten zweiten Zuführungseinrichtung (30a) als eine zweite Führungskante (Fb) dient, an welcher eine Seitenkante des Tape-Bandmaterials (2) und/oder des zweiten Tapes (5b) flüchtig ausgerichtet ist.

16. Tapelegeverfahren nach einem der Ansprüche 11 bis 15, **dadurch gekennzeichnet, dass** die erste Führungskante (Fa) oder die zweite Führungskante (Fb) als virtuelle Nulllinie (N) dient die erste Legeeinrichtung (40a) und/oder die zweite Legeeinrichtung (40b) relativ zur Nulllinie (N) in Querrichtung (61) bewegt wird.

## Claims

1. Tape-laying apparatus (1), comprising
a first material supply unit (10a) for supplying a tape strip material (2), a first cutting device (20a) for separating a first tape (5a) from the tape strip material (2),
a first laying device (40a) for picking up and for placing the first tape (5a) separated by the first cutting device (20a) on a laying table (50),
a second material supply unit (10b) for supplying a tape strip material (2),
a second cutting device (20b) having a cutting means for separating a second tape (5b) from the tape strip material (2),
a second laying device (40b) for picking up and for placing the second tape (5b) separated by the second cutting device (20b) on the laying table (50), and
a control device for open-loop and/or closed-loop control of the operation of the tape-laying apparatus,
**characterised in that**
the first laying device (40a) and/or the second laying device (40b) are configured to perform a transverse movement in a transverse direction (61), and the control device is configured to effect open-loop and/or closed-loop control of the transverse movement of the first laying device (40a) and/or the second laying device (40b).

2. Tape-laying apparatus (1) according to claim 1, **characterised in that** the control device is configured to effect open-loop and/or closed-loop control of the transverse movement of the first laying device (40a) and/or the second laying device (40b) in such a way that the first tape (5a) and the second tape (5b) are placed end to end, with a specified overlap or with a specified gap on the laying table (50).

3. Tape-laying apparatus (1) according to either one of the preceding claims, **characterised in that** the control device is configured to effect open-loop and/or closed-loop control of the first laying device (40a) and the second laying device (40b) so that the transverse movement of the first laying device (40a) and/or the second laying device (40b) takes place at least partly simultaneously with a lowering of the first laying device (40a) and the second laying device (40b) for placement of the first tape (5a) and the second tape (5b) on the laying table (50).

4. Tape-laying apparatus (1) according to any one of the preceding claims, **characterised in that** the control device is configured to effect open-loop and/or closed-loop control of the lowering of the first laying device (40a) and the second laying device (40b) for placement of the first tape (5a) and the second tape (5b) on the laying table (50) so that the lowering of the second laying device (40b) takes place with a time difference or with a difference in height relative to the lowering of the first laying device (40a).

5. Tape-laying apparatus (1) according to any one of the preceding claims, **characterised in that** a side edge of the first cutting device (20a) or a side edge of a first supply device (30a) arranged between the first cutting device (20a) and the first laying device (40a) serves as a first guide edge (Fa) with which a side edge of the tape strip material (20) and/or of the first tape (5a) is in flush alignment, and a side edge of the second cutting device (20b) or a side edge of a second supply device (30b) arranged between the second cutting device (20b) and the second laying device (40b) serves as a second guide edge (Fb) with which a side edge of the tape strip material (2) and/or of the second tape (5b) is in flush alignment.

6. Tape-laying apparatus according to claim 5, **characterised in that** the first guide edge (Fa) or the second guide edge (Fb) serves as a virtual zero line (N), and the control device is configured to effect open-loop and/or closed-loop control of the transverse movement in a transverse direction (61) of the first laying device (40a) and/or the second laying device (40b) relative to the zero line (N).

7. Tape-laying apparatus (1) according to any one of the preceding claims, **characterised in that** the first laying device (40a) and the second laying device (40b) each have at least one tacking device, especially an ultrasonic device, which is configured to tack the first tape (5a) and second tape (5b), after placement on the laying table (50), to a tape ply located therebelow.

8. Tape-laying apparatus (1) according to any one of the preceding claims, **characterised in that** the first laying device (40a), the second laying device (40b), the first cutting device (20a), the second cutting device (20b), a first supply device (30a) arranged between the first cutting device (20a) and the first laying device (40a), and/or a second supply device (30b) arranged between the second cutting device (20b) and the second laying device (40b) each have a planar transport element, the tape strip material (2) or the first tape (5a) or second tape (5b), as the case may be, being transported on a surface of the planar transport element.

9. Tape-laying apparatus (1) according to claim 8, **characterised in that** the planar transport element is implemented in the form of an endless transport belt (21a, 21b, 31a, 31b, 41a, 41b) circulating around guide rollers (22a, 22b, 32a, 32b, 42a, 42b), and/or the planar transport element has a plate-like support surface which is movable in the direction of and in the opposite direction to the production direction (60) of the tape strip material (2) or the first tape (5a) or second tape (5b), as the case may be.

10. Tape-laying apparatus (1) according to either one of claims 8 and 9, **characterised in that** there is further provided a vacuum device which is connected to the planar transport element in such a way as to hold the tape strip material (2) and/or the first tape (5a) and second tape (5b) on the planar transport element by means of a partial vacuum generated by the vacuum device.

11. Tape-laying method, comprising:
supplying tape strip material (2) to a first cutting device (20a), and
supplying tape strip material (2) to a second cutting device (20b),
separating a first tape (5a) from the tape strip material (2) by means of the first cutting device (20a), and separating a second tape (5b) from the tape strip material (2) by means of the second cutting device (20b),
picking up the first tape (5a) by means of a first laying device (40a), and
picking up the second tape (5b) by means of a second laying device (40b), and
placing the first tape (5a) and the second tape (5b) on a laying table (50) by means of the first and second laying devices (40a, 40b),
**characterised in that**
after pick-up of the second tape (5b) by means of the second laying device (40b) and before placement of the second tape (5b) on the laying table (50), the second laying device (40b) is moved in a transverse direction (61).

12. Tape-laying method according to claim 11, **characterised in that** the transverse movement in a transverse direction (61) of the second laying device (40b) is performed in such a way that the first tape (5a) and the second tape (5b) are placed end to end, with a specified overlap or with a specified gap on the laying table (50).

13. Tape-laying method according to either one of claims 11 and 12, **characterised in that** the first laying device (40a) and/or the second laying device (40b) is moved in a transverse direction (61) at least partly simultaneously with a lowering of the first laying device (40a) and/or the second laying device (40b) for placement of the first tape (5a) and the second tape (5b) on the laying table (50).

14. Tape-laying method according to any one of claims 11 to 13, **characterised in that** the second laying device (40b) is lowered with a time difference, preferably of from 0.1 to 0.4 seconds, especially preferably from 0.2 to 0.3 seconds, or with a difference in height relative to the lowering of the first laying device (40a).

15. Tape-laying method according to any one of claims 11 to 14, **characterised in that** a side edge of the first cutting device (20a) or a side edge of a first supply device (30a) arranged between the first cutting device (20a) and the first laying device (40a) serves as a first guide edge (Fa) with which a side edge of the tape strip material (20) and/or of the first tape (5a) is in flush alignment, and a side edge of the second cutting device (20b) or a side edge of a second supply device (30a) arranged between the second cutting device (20b) and the second laying device (40b) serves as a second guide edge (Fb) with which a side edge of the tape strip material (2) and/or of the second tape (5b) is in flush alignment.

16. Tape-laying method according to any one of claims 11 to 15, **characterised in that** the first guide edge (Fa) or the second guide edge (Fb) serves as a virtual zero line (N), and the first laying device (40a) and/or the second laying device (40b) is moved in a transverse direction (61) relative to the zero line (N).

## Revendications

1. Dispositif (1) de pose de rubans, comprenant
une première unité (10a) d'alimentation en matériau, conçue pour délivrer un matériau (2) en bandes de rubans,
un premier appareil de sectionnement (20a), conçu pour séparer un premier ruban (5a) d'avec ledit matériau (2) en bandes de rubans,
un premier appareil applicateur (40a) dévolu au prélèvement et à la mise en place, sur une table de pose (50), dudit premier ruban (5a) séparé par ledit premier appareil de sectionnement (20a),
une seconde unité (10b) d'alimentation en matériau, conçue pour délivrer un matériau (2) en bandes de rubans,
un second appareil de sectionnement (20b) équipé d'un moyen sectionneur, en vue de séparer un second ruban (5b) d'avec ledit matériau (2) en bandes de rubans,
un second appareil applicateur (40b) dévolu au prélèvement et à la mise en place, sur ladite table de pose (50), dudit second ruban (5b) séparé par ledit second appareil de sectionnement (20b), et
un appareil de commande affecté à la commande et/ou à la régulation du fonctionnement du dispositif de pose de rubans,
**caractérisé par le fait que**
le premier appareil applicateur (40a) et/ou le second appareil applicateur (40b) est (sont) agencé(s) en vue d'effectuer un mouvement transversal dans une direction transversale (61),
et l'appareil de commande est agencé en vue de commander et/ou de réguler le mouvement transversal dudit premier appareil applicateur (40a) et/ou dudit second appareil applicateur (40b).

2. Dispositif (1) de pose de rubans, selon la revendication 1, **caractérisé par le fait que** l'appareil de commande est agencé en vue de commander et/ou de réguler le mouvement transversal du premier appareil applicateur (40a), et/ou du second appareil applicateur (40b), de façon telle que le premier ruban (5a) et le second ruban (5b) soient mis en place, sur la table de pose (50), bout à bout, avec chevauchement préétabli ou avec discontinuité préétablie.

3. Dispositif (1) de pose de rubans, selon l'une des revendications précédentes, **caractérisé par le fait que** l'appareil de commande est agencé en vue de commander et/ou de réguler le mouvement transversal du premier appareil applicateur (40a), et du second appareil applicateur (40b), de façon telle que le mouvement transversal dudit premier appareil applicateur (40a) et/ou dudit second appareil applicateur (40b) ait lieu, au moins partiellement, en simultanéité avec un abaissement dudit premier appareil applicateur (40a) et dudit second appareil applicateur (40b), ciblant la mise en place du premier ruban (5a) et du second ruban (5b) sur la table de pose (50).

4. Dispositif (1) de pose de rubans, selon l'une des revendications précédentes, **caractérisé par le fait que** l'appareil de commande est agencé en vue de commander et/ou de réguler l'abaissement du premier appareil applicateur (40a) et du second appareil applicateur (40b), ciblant la mise en place du premier ruban (5a) et du second ruban (5b) sur la table de pose (50), de telle manière que l'abaissement dudit second appareil applicateur (40b) s'opère avec un décalage dans le temps ou avec un décalage en hauteur par rapport à l'abaissement dudit premier appareil applicateur (40a).

5. Dispositif (1) de pose de rubans, selon l'une des revendications précédentes, **caractérisé par le fait qu'**une arête latérale du premier appareil de sectionnement (20a), ou une arête latérale d'un premier appareil d'alimentation (30a) interposé entre ledit premier appareil de sectionnement (20a) et le premier appareil applicateur (40a), remplit la fonction d'une première arête de guidage (Fa) avec laquelle une arête latérale du matériau (2) en bandes de rubans, et/ou du premier ruban (5a), est alignée de manière transitoire,
et une arête latérale du second appareil de sectionnement (20b), ou une arête latérale d'un second appareil d'alimentation (30b) interposé entre ledit second appareil de sectionnement (20b) et le second appareil applicateur (40b), remplit la fonction d'une seconde arête de guidage (Fb) avec laquelle une arête latérale du matériau (2) en bandes de rubans, et/ou du second ruban (5b), est alignée de manière transitoire.

6. Dispositif (1) de pose de rubans, selon la revendication 5, **caractérisé par le fait que** la première arête de guidage (Fa) ou la seconde arête de guidage (Fb) remplit la fonction d'une ligne zéro (N) virtuelle, et l'appareil de commande est agencé en vue de commander et/ou de réguler le mouvement transversal du premier appareil applicateur (40a) et/ou du second appareil applicateur (40b), dans la direction transversale (61), par rapport à ladite ligne zéro (N).

7. Dispositif (1) de pose de rubans, selon l'une des revendications précédentes, **caractérisé par le fait que** le premier appareil applicateur (40a) et le second appareil applicateur (40b) sont munis, à chaque fois, d'au moins un appareil de rattachement, en particulier d'un appareil à ultrasons agencé pour rattacher le premier ruban (5a), respectivement le second ruban (5b) à une couche de ruban sous-jacente après la mise en place sur la table de pose (50).

8. Dispositif (1) de pose de rubans, selon l'une des revendications précédentes, **caractérisé par le fait que** le premier appareil applicateur (40a), le second appareil applicateur (40b), le premier appareil de sectionnement (20a), le second appareil de sectionnement (20b), un premier appareil d'alimentation (30a) interposé entre ledit premier appareil de sectionnement (20a) et ledit premier appareil applicateur (40a), et/ou un second appareil d'alimentation (30b) interposé entre ledit second appareil de sectionnement (20b) et ledit second appareil applicateur (40b), sont pourvus d'un élément de transport aplati respectif, sachant que le matériau (2) en bandes de rubans, le premier ruban (5a), ou le second ruban (5b), est respectivement transporté sur une surface dudit élément de transport aplati.

9. Dispositif (1) de pose de rubans, selon la revendication 8, **caractérisé par le fait que** l'élément de transport aplati est réalisé sous la forme d'une bande transporteuse (21a, 21b, 31a, 31b, 41a, 41b) sans fin, tournant autour de rouleaux de renvoi (22a, 22b, 32a, 32b, 42a, 42b) ; et/ou **par le fait que** ledit élément de transport aplati est doté d'une surface de support en forme de platine qui peut être déplacée dans, et en sens inverse de la direction de production (60) respective du matériau (2) en bandes de rubans, du premier ruban (5a) ou du second ruban (5b).

10. Dispositif (1) de pose de rubans, selon l'une des revendications 8 ou 9, **caractérisé par le fait qu'**un appareil de création d'un vide, prévu par ailleurs, est relié à l'élément de transport aplati en vue de retenir le matériau (2) en bandes de rubans et/ou, respectivement, le premier ruban (5a) ou le second ruban (5b) sur ledit élément de transport aplati, au moyen d'une dépression engendrée par ledit appareil de création d'un vide.

11. Procédé de pose de rubans, consistant :
à introduire du matériau (2) en bandes de rubans dans un premier appareil de sectionnement (20a), et à introduire du matériau (2) en bandes de rubans dans un second appareil de sectionnement (20b),
à séparer un premier ruban (5a) d'avec ledit matériau (2) en bandes de rubans, au moyen dudit premier appareil de sectionnement (20a), et à séparer un second ruban (5b) d'avec ledit matériau (2) en bandes de rubans, au moyen dudit second appareil de sectionnement (20b),
à prélever ledit premier ruban (5a) au moyen d'un premier appareil applicateur (40a), et à prélever ledit second ruban (5b) au moyen d'un second appareil applicateur (40b), et
à mettre en place ledit premier ruban (5a) et ledit second ruban (5b) sur une table de pose (50), au moyen desdits premier et second appareils applicateurs (40a, 40b),
**caractérisé par le fait**
**qu'**à l'issue du prélèvement du second ruban (5b) au moyen du second appareil applicateur (40b), et préalablement à la mise en place dudit second ruban (5b) sur la table de pose (50), ledit second appareil applicateur (40b) est mû dans une direction transversale (61).

12. Procédé de pose de rubans, selon la revendication 11, **caractérisé par le fait que** le mouvement transversal du second appareil applicateur (40b), dans la direction transversale (61), est effectué de façon telle que le premier ruban (5a) et le second ruban (5b) soient mis en place, sur la table de pose (50), bout à bout, avec un chevauchement préétabli ou avec une discontinuité préétablie.

13. Procédé de pose de rubans, selon l'une des revendications 11 ou 12, **caractérisé par le fait que** le premier appareil applicateur (40a) et/ou le second appareil applicateur (40b) est (sont) mu(s), dans une direction transversale (61), au moins partiellement en simultanéité avec un abaissement dudit premier appareil applicateur (40a) et/ou dudit second appareil applicateur (40b) ciblant la mise en place du premier ruban (5a) et du second ruban (5b) sur la table de pose (50).

14. Procédé de pose de rubans, selon l'une des revendications 11 à 13, **caractérisé par le fait que** le second appareil applicateur (40b) est abaissé, par rapport à l'abaissement du premier appareil applicateur (40a), avec un décalage dans le temps de 0,1 à 0,4 seconde de préférence, de 0,2 à 0,3 seconde avec préférence particulière, ou avec un décalage en hauteur.

15. Procédé de pose de rubans, selon l'une des revendications 11 à 14, **caractérisé par le fait qu'**une arête latérale du premier appareil de sectionnement (20a), ou une arête latérale d'un premier appareil d'alimentation (30a) interposé entre ledit premier appareil de sectionnement (20a) et le premier appareil applicateur (40a), remplit la fonction d'une première arête de guidage (Fa) avec laquelle une arête latérale du matériau (2) en bandes de rubans, et/ou du premier ruban (5a), est alignée de manière transitoire,
et une arête latérale du second appareil de sectionnement (20b), ou une arête latérale d'un second appareil d'alimentation (30b) interposé entre ledit second appareil de sectionnement (20b) et le second appareil applicateur (40b), remplit la fonction d'une seconde arête de guidage (Fb) avec laquelle une arête latérale du matériau (2) en bandes de rubans, et/ou du second ruban (5b), est alignée de manière transitoire.

16. Procédé de pose de rubans, selon l'une des revendications 11 à 15, **caractérisé par le fait que** la première arête de guidage (Fa) ou la seconde arête de guidage (Fb) remplit la fonction d'une ligne zéro (N) virtuelle, le premier appareil applicateur (40a) et/ou le second appareil applicateur (40b) étant mu(s) dans la direction transversale (61) par rapport à ladite ligne zéro (N).
